# EUROPEAN PATENT APPLICATION

(11) **EP 4 738 957 A1**
(43) Date of publication of application: **06.05.2026**
(21) Application number: 23942803.0
(22) Date of filing: 28.06.2023
(51) Int. Cl.: H04W 72/0453

(54) **INFORMATION PROCESSING METHODS AND APPARATUSES, AND COMMUNICATION DEVICE AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Gunzelmann, Rainer
(86) International application number: PCT/CN2023/103363
(87) International publication number: WO 2025/000283

(57) **Abstract**

Embodiments of the present disclosure provide information processing methods and apparatuses, and a communication device and a storage medium. An information processing method executed by a terminal may comprise: receiving a first message, wherein the first message is used for indicating or configuring a plurality of physical uplink shared channel (PUSCH) transmissions in a plurality of time slots; and on the basis of the first message, determining, on a symbol used for a PUSCH transmission in each time slot, a frequency domain range for the PUSCH transmission, wherein the symbol comprises at least one of a subband full duplex (SBFD) symbol and a non-SBFD symbol.

## Description

### TECHNICAL FIELD

The disclosure relates to, but is not limited to, the field of wireless communication technologies, and in particular to an information processing method and apparatus, a communication device, and a storage medium.

### BACKGROUND

In the field of communications technologies, in order to improve uplink coverage and throughput, research on subband full duplex (SBFD) is deployed. In a sub-band full-duplex scenario, a downlink (DL) symbol, an SBFD symbol, a flexible (F) symbol and an uplink (UL) symbol appear.

### SUMMARY

Embodiments of the present disclosure provide an information processing method and apparatus, a communication device, and a storage medium.

According to a first aspect of the embodiments of the present disclosure, an information processing method is provided. The method is performed by a terminal, and the method includes:
receiving a first message, where the first message is used to indicate or configure a plurality of physical uplink shared channel (PUSCH) transmissions in a plurality of slots; and
determining, based on the first message, a frequency domain range for a PUSCH transmission on symbols for the PUSCH transmission in each of the plurality of slots, where the symbols include at least one of subband full duplex (SBFD) symbols or non-SBFD symbols.

According to a second aspect of the embodiments of the present disclosure, an information processing method is provided. The method is performed by a network device, and the method includes:
sending a first message, where the first message is used to indicate or configure a plurality of PUSCH transmissions in a plurality of slots, symbols for the PUSCH transmission in each of the plurality of slots include at least one of SBFD symbols or non-SBFD symbols, and a frequency domain range used for the PUSCH transmission in the SBFD symbols is same as or different from a frequency domain range used for the PUSCH transmission in the non-SBFD symbols.

According to a third aspect of the embodiments of the present disclosure, a terminal is provided. The terminal includes:
a receiving module, configured to receive a first message, where the first message is used to indicate or configure a plurality of PUSCH transmissions in a plurality of slots; and
a determining module, configured to determine, based on the first message, a frequency domain range for a PUSCH transmission on symbols for the PUSCH transmission in each of the plurality of slots, where the symbol includes at least one of SBFD symbols and non-SBFD symbols.

According to a fourth aspect of the embodiments of the present disclosure, a network device is provided. The network device includes:
a sending module, configured to send a first message, where the first message is used to indicate or configure a plurality of PUSCH transmissions in a plurality of slots, symbols for the PUSCH transmission in each of the plurality of slots include at least one of SBFD symbols or non-SBFD symbols, and a frequency domain range used for the PUSCH transmission in the SBFD symbols is same as or different from a frequency domain range used for the PUSCH transmission in the non-SBFD symbols.

According to a fifth aspect of the embodiments of the present disclosure, a terminal is provided. The terminal includes:
one or more processors;
in which the terminal is configured to perform the information processing method provided in the first aspect.

According to a sixth aspect of the embodiments of the present disclosure, a network device is provided. The network device includes:
one or more processors;
in which the network device is configured to perform the information processing method provided in the second aspect.

According to a seventh aspect of the embodiments of the present disclosure, a communication system is provided. The system includes a terminal and a network device. The terminal is configured to implement the information processing method provided in the first aspect, and the network device is configured to implement the information processing method provided in the second aspect.

According to an eighth aspect of the embodiments of the present disclosure, a storage medium is provided. The storage medium stores instructions that, when run on a communication device, cause the communication device to perform the information processing method provided in the first aspect or the second aspect.

In the technical solution provided by the embodiments of the present disclosure, the first message is received, where the first message is used to indicate or configure the plurality of PUSCH transmissions in the plurality of slots; and the frequency domain range for the PUSCH transmission is determined on symbols for the PUSCH transmission in each slot based on the first message, where the symbols include at least one of SBFD symbols and non-SBFD symbols. In this way, the terminal can explicitly determine the frequency ranges used for the PUSCH transmissions on the non-SBFD symbols and the SBFD symbols, to improve reliability of the PUSCH transmissions.

It should be understood that the above general description and the following detailed description are exemplary and explanatory only, and are not intended to limit the embodiments of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the embodiments of the present disclosure.
FIG. 1 is a schematic structural diagram of a wireless communication system according to an example embodiment.
FIG. 2a is a schematic structural diagram of different slots according to an example embodiment.
FIG. 2b is a schematic diagram of a plurality of PUSCH transmissions according to an example embodiment.
FIG. 2c is a schematic diagram of a plurality of PUSCH transmissions according to an example embodiment.
FIG. 3 is a schematic flowchart of an information processing method according to an example embodiment.
FIG. 4 is a schematic diagram of a UL frequency domain range according to an example embodiment.
FIG. 5a is a schematic diagram of a plurality of PUSCH transmissions according to an example embodiment.
FIG. 5b is a schematic diagram of a plurality of PUSCH transmissions according to an example embodiment.
FIG. 5c is a schematic diagram of a plurality of PUSCH transmissions according to an example embodiment.
FIG. 5d is a schematic diagram of a plurality of PUSCH transmissions according to an example embodiment.
FIG. 6a is a schematic diagram of a time-frequency domain resource occupation situation of a plurality of PUSCH transmissions according to an example embodiment.
FIG. 6b is a schematic diagram of a time-frequency domain resource occupation situation of a plurality of PUSCH transmissions according to an example embodiment.
FIG. 6c is a schematic diagram of a time-frequency domain resource occupation situation of a plurality of PUSCH transmissions according to an example embodiment.
FIG. 6d is a schematic diagram of a time-frequency domain resource occupation situation of a plurality of PUSCH transmissions according to an example embodiment.
FIG. 6e is a schematic diagram of a time-frequency domain resource occupation situation of a plurality of PUSCH transmissions according to an example embodiment.
FIG. 6f is a schematic diagram of a time-frequency domain resource occupation situation of a plurality of PUSCH transmissions according to an example embodiment.
FIG. 6g is a schematic diagram of a plurality of PUSCH transmissions according to an example embodiment.
FIG. 7 is a schematic flowchart of an information processing method according to an example embodiment.
FIG. 8 is a schematic flowchart of an information processing method according to an example embodiment.
FIG. 9 is a schematic structural diagram of a terminal according to an example embodiment.
FIG. 10 is a schematic structural diagram of a network device according to an example embodiment.
FIG. 11 is a schematic structural diagram of a UE according to an example embodiment.
FIG. 12 is a schematic structural diagram of a communication device according to an example embodiment.

### DETAILED DESCRIPTION

Example embodiments will now be described in detail, examples of which are illustrated in the accompanying drawings. When the following description refers to the accompanying drawings, unless otherwise indicated, the same numbers in different drawings represent the same or similar elements. Implementations described in the following example embodiments do not represent all embodiments consistent with the embodiments of the present disclosure. Rather, they are merely examples of apparatuses and methods consistent with some aspects of embodiments of the present disclosure.

The term used in the present disclosure is for the purpose of describing particular embodiments only and is not intended to limit the scope of the present disclosure. The singular forms "a", "an", and "the" used in the present disclosure are also intended to include the plural forms unless the context clearly indicates otherwise. It should also be understood that the term "and/or" as used herein refers to and includes any or all possible combinations of one or more associated listed items.

It should be understood that although the terms first, second, third, etc. may be used to describe various information in the embodiments of the present disclosure, such information should not be limited to these terms. These terms are only used to distinguish information of the same type from one another. For example, without departing from the scope of the embodiments of the present disclosure, first information may also be referred to as second information, and similarly, second information may also be referred to as first information. Depending on the context, the word "if" as used here can be interpreted as "when", "in a case that", or "in response to determining that".

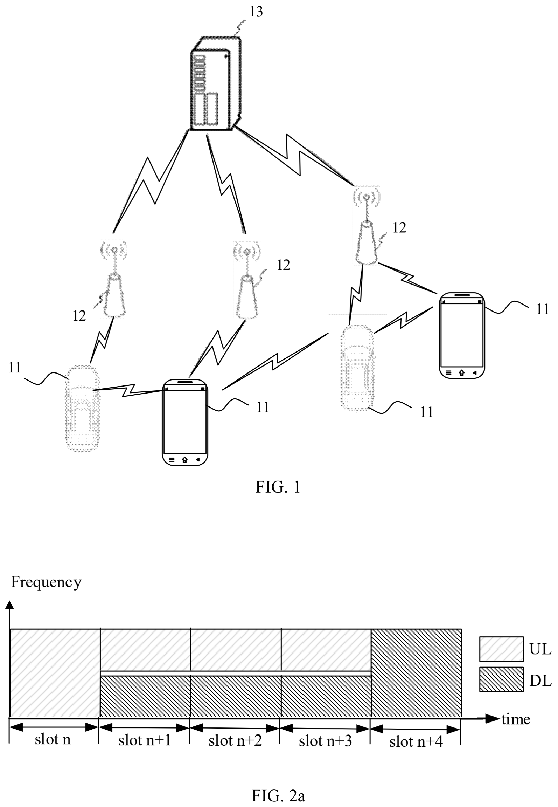

FIG. 1 is a schematic structural diagram of a wireless communication system according to an embodiment of the present disclosure. As shown in FIG. 1, the wireless communication system is a communication system based on cellular mobile communication technologies. The wireless communication system may include: several user equipments (UEs) 11, and several access network devices 12

The UE 11 may be a device that provides voice and/or data connectivity to a user. The UE 11 may communicate with one or more core networks via a Radio Access Network (RAN). The UE 11 may be an Internet of Things (IoT) UE, such as a sensor device, a mobile phone (or "cellular" phone), and a computer with an IoT UE. For example, it may be a fixed, portable, pocket, handheld, computer-embedded, or vehicle-mounted device. For example, a station (STA), a subscriber unit, a subscriber station, a mobile station, a mobile station, a remote station, an access point, a remote terminal, an access terminal, a user terminal, a user agent, a user device, or a UE. Alternatively, the UE 11 may also be a wearable device, a virtual reality (VR) device, an augmented reality (AR) device, or a VR/AR hybrid head-mounted device. Alternatively, the UE 11 may also be a device for an unmanned aerial vehicle. Alternatively, the UE 11 may also be an in-vehicle device, such as an onboard computer with wireless communication capabilities, or a wireless communication device connected to an external onboard computer. Alternatively, the UE 11 may also be a roadside device, such as a street light, traffic light, or other roadside device with wireless communication capabilities.

The access network device 12 may be a device used in the wireless communication system to communicate with the UE11, which may be a base station, an access point, or a network device, or may refer to a device in the access network that communicates with the wireless terminal through one or more sectors on the air interface. The network device may be configured to perform mutual conversion between the received air frame and the IP packet as a router between the wireless terminal and the rest of the access network, where the remaining portion of the access network may include an Internet Protocol (IP) network. The network device may also coordinate attribute management of the air interface. The wireless communication system may be a 4th generation mobile communication technology (4G) system, also referred to as a Long Term Evolution (LTE) system; or the wireless communication system may alternatively be a 5G system, also referred to as a new radio (NR) system or a 5G NR system. Alternatively, the wireless communication system may also be a next generation system of the 5G system. The access network in the 5G system may be referred to as a New Generation-Radio Access Network (NG-RAN).

The access network device 12 may be an evolved access device (eNB) used in a 4G system. Alternatively, the access network device 12 may also be an access device (gNB) in a 5G system that adopts a central-distributed architecture. When the access network device 12 adopts a centralized-distributed architecture, it typically includes a central unit (CU) and at least two distributed units (DUs). The CU is provided with a protocol stack consisting of a Packet Data Convergence Protocol (PDCP) layer, a Radio Link Control (RLC) layer, and a Median access Control (MAC) layer. The distributed unit is provided with a Physical (PHY) layer protocol stack. The specific implementation of the access network device 12 is not limited in the embodiments of the present disclosure.

The access network device 12 and the UE 11 may establish a wireless connection via a radio air interface. In different implementations, the radio air interface is a radio air interface based on a fourth-generation mobile communication network technology (4G) standard, or the radio air interface is a radio air interface based on a fifth-generation mobile communication network technology (5G) standard, such as a new radio air interface; or the radio air interface may also be a radio air interface based on a next-generation mobile communication network technology standard based on 5G.

In some embodiments, an E2E (end-to-end) or a D2D (device to device, terminal-to-terminal) connection may also be established between the UE 11. For example, vehicle to everything (V2X) include scenarios of a vehicle to vehicle communication (V2V) communication, a vehicle to infrastructure (V2X) communication, or a vehicle to pedestrian (V2P) communication, etc.

In some embodiments, the wireless communication system may further include a core network device 13, and a plurality of access network devices 12 are respectively connected to the core network device 13.

In some embodiments, the core network device 13 may be a mobility management entity (MME) in an evolved packet core (EPC). Alternatively, the core network device may be a serving gateway (SGW), a public data network gateway (PGW), a policy and charging rules function unit (PCRF), or a home subscriber server (HSS).

In some embodiments, the core network device 13 may include one or more network elements, for example, an access and mobility management function (AMF), a session management function (SMF), a user plane function (UPF), a policy control function (PCF), a network repository function (NRF) entity, or the like.

In order to facilitate understanding by those skilled in the art, embodiments of the present disclosure involve a plurality of implementations to clearly illustrate the technical solutions of the embodiments of the present disclosure. Of course, those skilled in the art may understand that the various embodiments provided in the embodiments of the present disclosure may be executed separately, or may be executed together with the method of other embodiments in the embodiments of the present disclosure, and may also be executed separately or in combination with some of the other related technologies, which is not limited in the embodiments of the present disclosure.

In the embodiments of the present disclosure, if there is no special description and a logical conflict, terms and/or descriptions between the embodiments have consistency, and may be referred to each other, and the technical features in different embodiments may be combined according to their internal logical relationship to form a new embodiment.

Terms used in the embodiments of the present disclosure are only for the purpose of describing specific embodiments, and are not intended to limit the present disclosure.

In order to improve uplink coverage and throughput, duplex enhancement has developed research on sub-band full duplex (SBFD).

In some embodiments, a carrier component (CC) is divided into a plurality of subbands in a downlink or flexible (F) symbol, a frequency domain range is divided into a plurality of subbands (SBs), the plurality of SBs include one UL subband and at least one (1 or 2) DL subband, and the base station may send a DL signal in the DL subband and simultaneously receive a UL signal in the UL subband. UL or F symbols may be configured via at least one of:
a general signaling, for example, a TDD-UL-DL-ConfigCommon configuration;
a dedicated signaling, for example, a TDD-UL-DL-ConfigDedicated configuration;
a downlink control information (DCI) indication, for example, an indication of DCI format 2-0 (DCI Format 2-0).

In some examples, one slot includes a plurality of symbols, for example, for a Normal cyclic prefix (CP), each slot includes 14 orthogonal frequency division multiplexing (OFDM) symbols; and for an Extended CP, each slot includes 12 OFDM symbols.

When one symbol contains both DL subbands and UL subbands in the frequency domain, the symbol may be referred to as an SBFD symbol.

In some embodiments, when at least one SBFD symbol is included in a plurality of symbols included in one slot, the slot may be referred to as an SBFD slot.

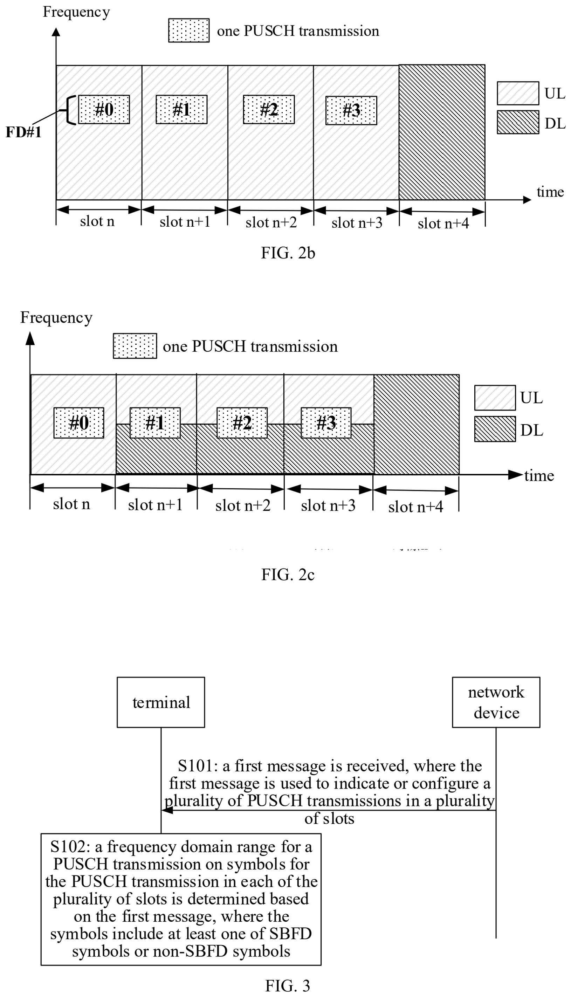

Referring to FIG. 2 a, a slot n is a UL slot, a slot n+1 to a slot n+3 are all SBFD slots, and a slot n +4 is a DL slot.

In some embodiments, when a plurality of symbols included in one slot are all SBFD symbols, the slot may be referred to as an SBFD slot.

In some embodiments, there may also be a guard band (GB) between a DL sub-band and a UL sub-band, and interference between a DL signal in the DL sub-band and a UL signal in the UL sub-band may be reduced by frequency domain isolation.

In some embodiments, a Downlink Control Information (DCI) indicates or a Radio Resource Control (RRC) configures the UE to perform the PUSCH transmission in a plurality of slots, which may exist in the following several forms:
1. PUSCH repetition type A with or without available slot counting;
2. with available slot counting: N * K slots are determined to transmit the PUSCH according to a DCI indication and the available slot counting;
3. without available slot counting: the DCI indicates the PUSCH is transmitted in consecutive N * K slots;
4. PUSCH repetition type A may be enabled via a configured grant-PUSCH (CG-PUSCH) type 1 or type 2, or may be enabled via a dynamic grant-PUSCH (DG-PUSCH);
5. In CG-PUSCH type 1/type 2 without repetition, the PUSCH is periodically transmitted on a certain time-frequency resource according to time-frequency resources configured by an RRC (type 1) or time-frequency resources that are configured by an RRC and activated by a DCI (type 2);
6. In transport block (TB) processing over multiple slots (TBoMS) with/without repetition, N * K slots for the PUSCH transmission are determined according to a DCI indication and the available slot counting;
7. a plurality of PUSCH transmissions are scheduled by single one DCI, where the DCI indicates allocation of one frequency domain resource and allocation of a plurality of time domain resources, and the PUSCH is transmitted in a plurality of time-frequency resources

In some embodiments, in the SBFD symbol, a DL subband (and GB) is unavailable for a UL transmission. In this case, the SBFD symbol and the UL symbol may have different frequency domain ranges used for the UL transmission. When the DCI indicates or the RRC configures the UE to transmit the PUSCH in multiple slots, it needs to determine, for a slot, a frequency domain (FD) of a SBFD symbol and of a non-SBFD symbol where the PUSCH is located.

In some embodiments, the PUSCH may include at least one of:
PUSCH repetition type A with or without available slot counting that is enabled by a CG-PUSCH type 1 or type 2, or enabled by a DG-PUSCH;
type 1 and type 2 CG-PUSCH without repetition;
a plurality of PUSCHs scheduled by a single DCI;
multiple PUSCH scheduled by single DCI; or
TBoMS with/without repetition.

### (1) PUSCH repetition type A

1. A configuration parameter in the RRC includes at least one of:
   numberOfRepetitions-r16, ENUMERATED{n1, n2, n3, n4, n7, n8, n12, n16};
   pusch-AggregationFactor, ENUMERATED{n2, n4, n8};
   repK, ENUMERATED{n1, n2, n4, n8};
2. According to FD range # 1 indicated by the DCI or configured by the RRC, the PUSCH is transmitted in continuous N*K slots (availableSlotCunting-r17 is not configured), or the PUSCH is transmitted in N*K slots (availableSlotCounting-r17 is configured), where N = 1 (that is, 1 TB is transmitted in one slot).

For DG-PUSCH repetition type A, if numberOfRepetitions-r16 is configured, K= numberOfRepetitions-r16; if pusch-AggregationFactor is configured, K = pusch-AggregationFactor; otherwise, K = 1.

For Type 1/type 2 CG-PUSCH repetition type A, if numberOfRepetitions-r16 is configured, K = numberOfRepetitions-r16; if repK is configured, K = repK.

### (2) CG-PUSCH type 1/type 2 without repetition

### 1. Type 1 CG-PUSCH

After the RRC configuration, it waits for a certain activation time, and the PUSCH may be periodically transmitted on the configured time-frequency resource by using the configured transmission parameter.

### 2. Type 2 CG-PUSCH.

The RRC configures a part of parameters, which includes: a cycle, an open-loop attack control, a waveform, a redundancy version, a repetition number, a frequency hopping, a HARQ process number, etc.

The DCI activates and configures parameters of: a time domain resource, a frequency domain resource, a DMRS, and an MCS (determining an activation time).

The PUSCH is periodically sent based on time-frequency resources configured by the RRC and activated and configured by the DCI.

The terminal needs to send an MAC CE to confirm activation or deactivation of the type 2 CG-PUSCH, so as to avoid confusion caused by not transmitting the PUSCH in a case of no UL data.

### (3) Multiple PUSCHs scheduled by single DCI

According to frequency domain range FD#1 and a plurality of time domain ranges indicated in the DCI, the PUSCHs are transmitted in FD#1 within the indicated plurality of time domain ranges.

### (4) TBoMS with/without repetition

Configuration parameters in the RRC includes:
numberOfSlotsTBoMS-r17, ENUMERATED {n1, n2, n4, n8, spare4, spare3, spare2, spare1}; and
numberOfRepetitions-r16, ENUMERATED {n1, n2, n3, n4, n7, n8, n12, n16}.

One TB is transmitted in N slots, where N = numberOfSlotsTBoMS-R17, the N slots are repeated K times, and if umberOfRepetitions-r16 is configured, K = numberOfRepetitions-r16, otherwise K = 1.

In one or more of the following PUSCH transmissions:
PUSCH repetition type A with or without available slot counting that is enabled by a CG-PUSCH type 1 or type 2, or enabled by a DG-PUSCH;
Type 1 and type 2 CG-PUSCH without repetition;
Multiple PUSCH scheduled by single DCI; or
TBoMS with/without repetition,
When the DCI indicates or the RRC configures the UE to transmit the PUSCH in multiple slots, and the frequency domains available for the UL transmission in the SBFD slot and the non-SBFD slot are different, how to determine, for a slot, the frequency domain FD of the SBFD symbol and of the non-SBFD symbol where the PUSCH is located.

Referring to FIG. 2b, according to a plurality of time domain ranges and one frequency domain range FD#1 indicated by the DCI, the UE respectively sends PUSCH # 0, PUSCH#1, PUSCH#2, and PUSCH#3 in FD#1 within the plurality of indicated time domain ranges

Referring to FIG. 2c, a symbol in which PUSCH # 0 is located is a UL symbol, and symbols in which PUSCH#1, PUSCH#2, and PUSCH#3 are located are SBFD symbols and overlap with a frequency domain outside the UL frequency domain range (the frequency domain outside the UL frequency domain range cannot be used for UL transmission). In this case, it is required to determine frequency domain ranges used by PUSCH # 0, PUSCH#1, PUSCH#2, and PUSCH#3.

FIG. 3 is a flowchart of an information processing method according to an example embodiment. The information processing method is executed by the terminal. As shown in FIG. 3, the information processing method may include the following steps.

S101: a first message is received, where the first message is used to indicate or configure a plurality of PUSCH transmissions in a plurality of slots.

S102: a frequency domain range for a PUSCH transmission on symbols for the PUSCH transmission in each of the plurality of slots is determined based on the first message, where the symbols include at least one of SBFD symbols or non-SBFD symbols.

In some examples, the terminal may include various mobile terminals or fixed terminals. For example, the terminal may include, but is not limited to, a mobile phone, a wearable device, an Internet of Things device, or the like.

In some examples, the terminal receives the first message sent by the network device. The network device may be a base station, and the base station may be, for example, a gNB.

In some examples, the first message includes at least one of: a DCI, or an RRC message.

For example, the DCI is used to instruct the terminal to send the plurality of PUSCH transmissions in the plurality of slots, or the RRC message is used to configure the terminal to transmit the plurality of PUSCH transmissions in the plurality of slots.

In some examples, the PUSCH transmission is used for a transmission of uplink data, or may be used for a transmission of uplink control information (UCI).

In some examples, the plurality of PUSCH transmissions indicated or configured by the first message may be a plurality of different PUSCH transmissions or a plurality of repeated transmissions of a same PUSCH.

In some examples, the first message is used to instruct or configure the terminal to send the PUSCHs in the plurality of slots. For example, the first message instructs or configures the terminal to perform PUSCH repetition, TBoMS with or without repetition, or instruct the terminal to send a plurality of PUSCH transmissions scheduled by a single DCI.

In some examples, the first message may be used to indicate time domain resource information for the PUSCH transmissions.

For example, the time domain resource information includes information such as a slot position, a start symbol position and a time domain length in a slot. The time domain length may be used to represent the numerical count of consecutive symbols allocated to the PUSCH, where the counting starts from the start symbol position.

For example, time domain resource allocation information of the first message includes a row index, and the row index is used by the terminal to search for the time domain resource information for the PUSCH transmission from a preconfigured time domain resource allocation table.

In some examples, the first message may indicate a symbol position occupied by a PUSCH within each slot of the plurality of slots.

In some examples, symbols in one slot may be all SBFD symbols, or all non-SBFD symbols, or the symbols in one slot may include SBFD and non-SBFD symbols.

In some examples, a SBFD symbol is a symbol that includes both of a DL subband and a UL subband in the frequency domain; and a non-SBFD symbol is a symbol that does not include both the DL subband and UL subband in the frequency domain. For example, the non-SBFD symbol is a DL symbol, a UL symbol, or an F symbol.

In some examples, the DCI may indicate a plurality of PUSCH transmissions scheduled based on mini-slot. One mini-slot may be composed of some consecutive symbols in one slot, for example, the length of the uplink mini-slot may be 2, 4, or 7 symbols, and the mini-slot may start at any symbol in one slot.

In some examples, the symbols for the PUSCH transmissions in the plurality of slots may be signaled by the network via a high layer signaling or a physical layer signaling. For example, the physical layer signaling includes DCI.

In some examples, the symbols for the PUSCH transmissions within the plurality of slots include SBFD symbols and/or non-SBFD symbols.

For example, the symbols used for the PUSCH transmission in one slot are all non-SBFD symbols; or the symbols used for the PUSCH transmission in one slot are all SBFD symbols; or the symbols used for PUSCH transmission in one slot include SBFD symbols and non-SBFD symbols.

In some examples, types of symbols for the PUSCH transmissions within different slots may be the same or different. For example, symbols for a PUSCH transmission in a slot n are non-SBFD symbols, symbols for a PUSCH transmission in a slot n+1 are SBFD symbols, and symbols for a PUSCH transmission in a slot n+2 include SBFD symbols and non-SBFD symbols.

In some examples, a frequency domain range used for the PUSCH transmission in the SBFD symbols is same as or different from a frequency domain range used for the PUSCH transmission in the non-SBFD symbols.

In some examples, the first message may be used to indicate or configure a frequency domain range for the PUSCH transmission in the non-SBFD symbols. For example, the first message is DCI, and a frequency domain resource allocation (FDRA) field in the DCI indicates that the frequency domain range used for the PUSCH transmission in the non-SBFD symbols is a first frequency domain range.

In some examples, the frequency domain range of the PUSCH transmission indicates a frequency domain position occupied by the PUSCH transmission.

In some examples, the frequency domain range may be represented by a resource grid (RG), a bandwidth part (BWP), a physical resource block (PRB), and/or a resource block (RB).

In some examples, in a SBFD symbol, a frequency domain range available for a UL transmission is referred to as a UL frequency domain range, and a frequency domain range unavailable for a UL transmission is referred to as a non-UL frequency domain range.

In some examples, the UL frequency domain range may be a frequency domain range in which a UL sub-band overlaps with a UL BWP.

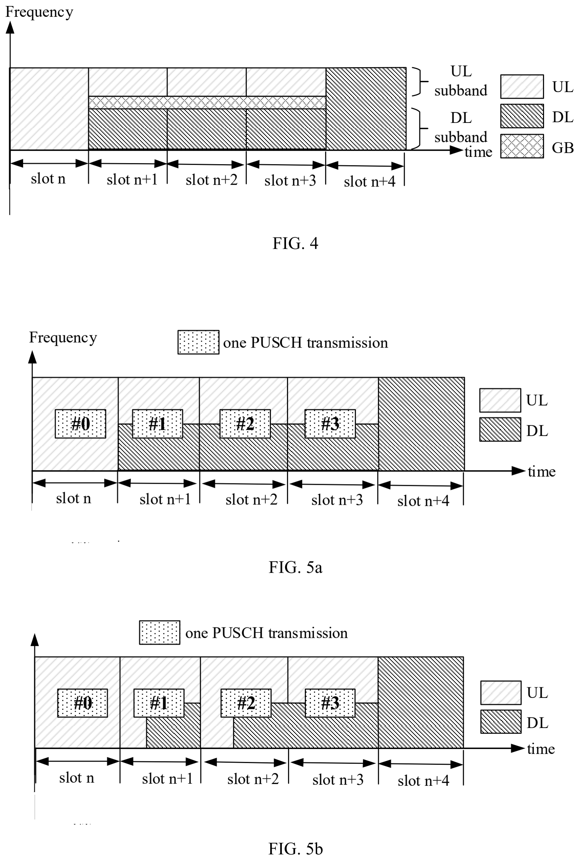

Referring to FIG. 4, the slot n is a UL slot, the slot n+1 to slot n+3 are SBFD slots, and the slot n +4 is a DL slot. Symbols included in the slot n and symbols included in the slot n +4 are non-SBFD symbols, and symbols included in the slot n+1 to slot n+3 are SBFD symbols. In a SBFD symbol, the UL frequency domain range may be a frequency domain range in which the UL sub-band overlaps with the UL BWP, and a frequency domain range in which a GB and a DL sub-band overlap with the UL BWP is a non-UL frequency domain range.

In some other examples, the UL frequency domain range may be a frequency domain range in which the UL subband and the GB overlap with the UL BWP.

In some examples, the frequency domain range used for the PUSCH transmission in the SBFD symbols is a second frequency domain range, and the second frequency domain range may be a frequency domain range in which the first frequency domain range indicated by the first message overlaps with the UL frequency domain range in the SBFD symbol.

The embodiments of the present disclosure provide the information processing method, including: receiving the first message, where the first message is used to indicate the plurality of PUSCH transmissions in the plurality of slots; determining, based on the first message, the frequency domain range for the PUSCH transmission on the symbols for the PUSCH transmission in each of the plurality of slots, where the symbols include at least one of SBFD symbols or non-SBFD symbols. In this way, the terminal can explicitly determine the frequency ranges used for the PUSCH transmissions on the non-SBFD symbols and on the SBFD symbols, so that the reliability of the PUSCH transmission can be improved, and a lack of how to determine the frequency domain range of the PUSCH transmission in the SBFD symbols in the prior art can be overcome.

In some embodiments, the method may further include:
receiving first information, where the first information indicates at least one of:
a category of symbols able to be used by the plurality of PUSCH transmissions; or
a category of symbols able to be used by any one of the plurality of PUSCH transmissions.

In the embodiments, by receiving the first information, since the first information explicitly indicates at least one of the category of the symbols that can be used by the plurality of PUSCH transmissions and the category of the symbol that can be used by any one of the plurality of PUSCH transmissions, the category of the symbols that can be used by the PUSCH transmissions can be clearly determined, and compared with a case in which the symbol category is not determined, the reliability of performing the plurality of PUSCH transmissions is improved.

In some embodiments, the first information indicates at least one of:
the plurality of PUSCH transmissions are able to use SBFD symbols and non-SBFD symbols, and any one of the plurality of PUSCH transmissions is able to use SBFD symbols or non-SBFD symbols;
the plurality of PUSCH transmissions are able to use SBFD symbols and non-SBFD symbols, and any one of the plurality of PUSCH transmissions is able to use SBFD symbols and non-SBFD symbols;
the plurality of PUSCH transmissions are able to use SBFD symbols, and any one of the plurality of PUSCH transmissions is able to use SBFD symbols; or
the plurality of PUSCH transmissions are able to use non-SBFD symbols, and any one of the plurality of PUSCH transmissions is able to use non-SBFD symbols.

The plurality of PUSCH transmissions are able to use SBFD symbols and non-SBFD symbols, and any one of the plurality of PUSCH transmissions may be only able to use SBFD symbols or non-SBFD symbols. For example, for N PUSCH transmissions, each PUSCH transmission in M PUSCH transmissions uses SBFD symbols, each PUSCH transmission in N-M PUSCH transmissions uses non-SBFD symbols, where M and N are both positive integers, and M is less than N.

Referring to FIG. 5a, PUSCH#0 to PUSCH#3 transmission is able to use SBFD symbols and non-SBFD symbols, where PUSCH#0 transmission uses non-SBFD symbols, and PUSCH#1 to PUSCH#3 transmission uses SBFD symbols.

The plurality of PUSCH transmissions are able to use SBFD symbols and non-SBFD symbols, and any one of the multiple PUSCH transmissions is able to use SBFD symbols and non-SBFD symbols.

Referring to FIG. 5b, PUSCH#0 to PUSCH#3 transmissions are able to use SBFD symbols and non-SBFD symbols, PUSCH#0 transmission uses non-SBFD symbols, PUSCH#1 to PUSCH#2 transmissions uses both SBFD symbols and non-SBFD symbols, and PUSCH#3 transmission uses SBFD symbols.

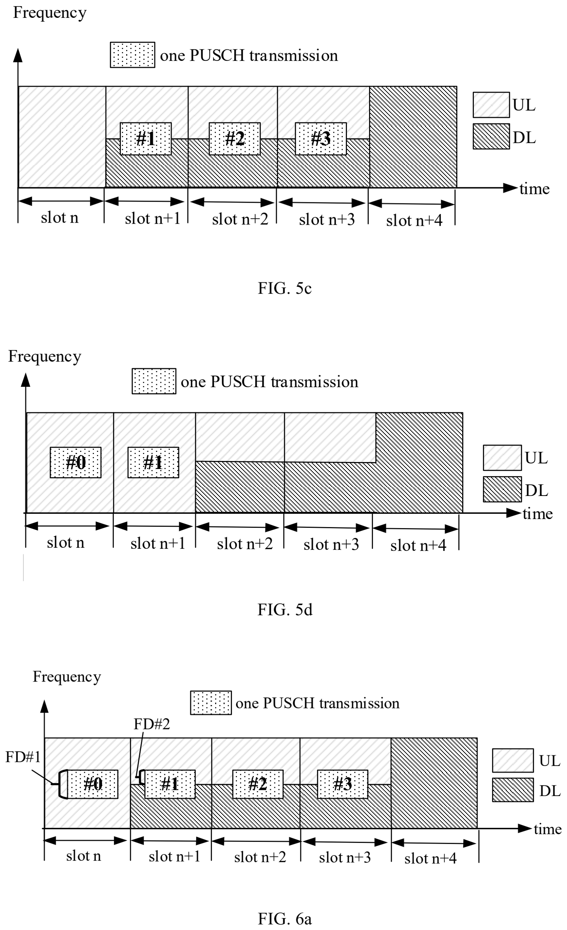

The plurality of PUSCH transmissions are able to use SBFD symbols, and any one of the plurality of PUSCH transmissions is able to use SBFD symbols. Referring to FIG. 5c, PUSCH#1 to PUSCH#3 transmissions use SBFD symbols, and any one of PUSCH#1 to PUSCH#3 transmissions uses SBFD symbols.

The plurality of PUSCH transmissions are able to use non-SBFD symbols, and any one of the plurality of PUSCH transmissions is able to use non-SBFD symbols. Referring to FIG. 5d, PUSCH#0 to PUSCH#1 transmissions use non-SBFD symbols, and any one of PUSCH#0 to PUSCH#1 transmissions uses non-SBFD symbols.

In the embodiments, the first information explicitly indicates symbols that are able to be used for performing the plurality of PUSCH transmissions, and symbols that are able to be used by any one of the plurality of PUSCH transmissions, so that the plurality of PUSCH transmissions can be more reliable.

In some embodiments, receiving the first information may include:
receiving the first information sent via a second message, where the second message includes at least one of a DCI message, an RRC message, a media access control (MAC) control element (CE) message, or a system information block (SIB).

Alternatively, the first information sent via the first message is received. The first message includes at least one of a DCI message or an RRC message.

In some embodiments, the terminal receives the first information sent by the network device via the DCI message.

In some embodiments, the terminal receives the first information sent by the network device via the RRC message.

In some embodiments, the terminal receives the first information sent by the network device via the MAC CE message.

In some embodiments, the terminal receives the first information sent by the network device via the SIB1 message.

In the embodiments, a message in the communication process may be reused to receive the first information, which can reduce signaling overheads, reduce resource consumption, and improve resource utilization efficiency.

In some embodiments, in the above step S102, determining, based on the first message, the frequency domain range for the PUSCH transmission on the symbols for the PUSCH transmission in each of the plurality of slots, includes at least one of:
for any slot, in response to symbols for the PUSCH transmission in the slot being non-SBFD symbols, determining that the frequency domain range for the PUSCH transmission in the slot is a first frequency domain range, where the first frequency domain range is a frequency domain range indicated by the first message for non-SBFD symbols; or
for any slot, in response to symbols for the PUSCH transmission in the slot being SBFD symbols, determining that the frequency domain range for the PUSCH transmission in the slot is a target frequency domain range.

In some examples, the first message is DCI, and an FDRA field in the DCI indicates that the frequency domain range used for the PUSCH transmission in non-SBFD symbol is the first frequency domain range.

In some examples, the first message is an RRC message, and the frequency domain range used for the PUSCH transmission in non-SBFD symbols is the first frequency domain range.

In some examples, the target frequency domain range may be the same as or different from the first frequency domain range.

In the embodiments, by determining that the frequency domain range for the PUSCH transmission in the non-SBFD symbols is the first frequency domain range, and determining that the frequency domain range for the PUSCH transmission in the SBFD symbols is the target frequency domain range, the frequency ranges used for the PUSCH transmissions on the non-SBFD symbols and the SBFD symbols are determined, so that the UE can send the PUSCH transmissions at the correct positions, thereby improving the reliability of the PUSCH transmission.

In some embodiments, the target frequency domain range is a second frequency domain range, and the second frequency domain range is a frequency domain range in which the first frequency domain range overlaps with a UL frequency domain range in the SBFD symbols.

In the embodiments, for any slot, if the symbols for the PUSCH transmission in the slot are non-SBFD symbols, it is determined that the frequency domain range for the PUSCH transmission in the non-SBFD symbols of the slot is the first frequency domain range (for example, FD#1); if the symbols for the PUSCH transmission in the slot are SBFD symbols, it is determined that the frequency domain range for the PUSCH transmission in the SBFD symbols of the slot is the second frequency domain range (for example, FD#2).

In some examples, for any slot, symbols used for the PUSCH transmission in the slot are all SBFD symbols or non-SBFD symbols. The frequency domain range used for the PUSCH transmission in the non-SBFD symbols is the first frequency domain range, and the frequency domain range used for the PUSCH transmission in the SBFD symbols is the second frequency domain range.

Referring to FIG. 6a, the slot n is a UL slot, and symbols of the slot n are non-SBFD symbols; the slot n+1 to slot n+3 are SBFD slots, and symbols of the slot n+1 to slot n+3 are all SBFD symbols. When the frequency domain range indicated by the first message for the non-SBFD symbols is FD#1, it may be determined that the frequency domain range used for PUSCH#0 transmission in the non-SBFD symbols of the slot n is FD#1. When symbols for PUSCH#1 transmission in the slot n+1 are SBFD symbols, it may be determined that the frequency domain range used for PUSCH#1 transmission in the SBFD symbols of the slot n+1 is FD#2. When symbols for PUSCH#2 transmission in the slot n+2 are SBFD symbols, it may be determined that the frequency domain range used for PUSCH#2 transmission in the SBFD symbols of the slot n+2 is FD#2. When symbols for PUSCH#3 transmission in the slot n+3 are SBFD symbols, it may be determined that the frequency domain range used for PUSCH#3 transmission in the SBFD symbols of the slot n+3 is FD#2. FD#2 is a frequency domain range in which FD#1 overlaps with the UL frequency domain range in the SBFD symbols.

In some other examples, symbols for the PUSCH transmission in a slot may include SBFD symbols and non-SBFD symbols. A frequency domain range used for the PUSCH transmission in the non-SBFD symbols is the first frequency domain range, and a frequency domain range used for the PUSCH transmission in the SBFD symbols is the second frequency domain range.

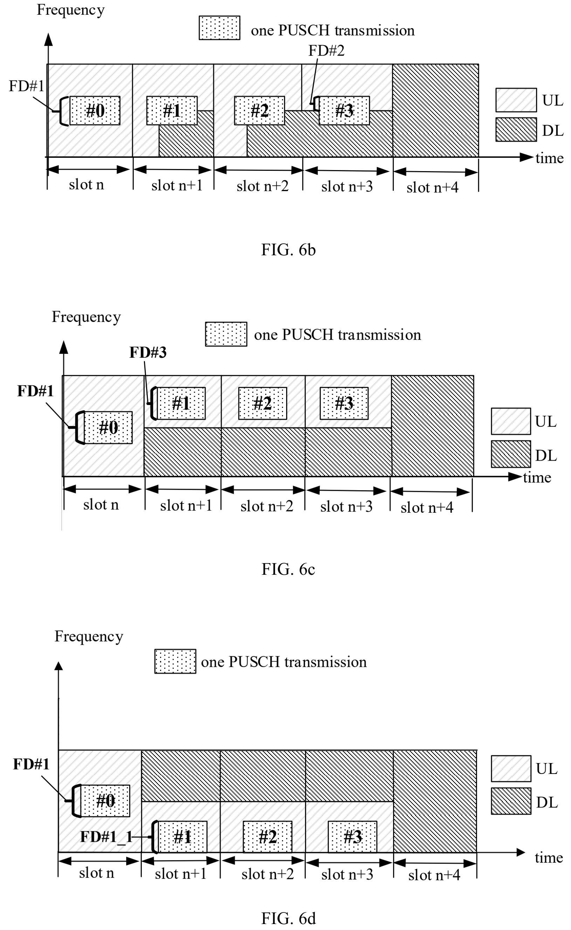

Referring to FIG. 6b, the slot n is a UL slot, and symbols of the slot n are non-SBFD symbols; the slot n+1 to slot n+3 are all SBFD slots. Symbols used for PUSCH#1 transmission in the slot n+1 include non-SBFD symbols and SBFD symbols, symbols used for PUSCH#2 transmission in the slot n+2 include non-SBFD symbols and SBFD symbols, and symbols used for PUSCH#3 transmission in the slot n+3 are all SBFD symbols. The frequency domain range indicated by the first message for the non-SBFD symbols is FD#1, and it may be determined that: the frequency domain range used for PUSCH#0 transmission in the non-SBFD symbols of the slot n is FD#1; the frequency domain range used for PUSCH#1 transmission in the non-SBFD symbols of the slot n+1 is FD#1, and the frequency domain range used for PUSCH#1 transmission in the SBFD symbols of the slot n+1 is FD#2; the frequency domain range used for PUSCH#2 transmission in the non-SBFD symbols of the slot n+2 is FD#1, and the frequency domain range used for PUSCH#2 transmission in the SBFD symbols of the slot n+2 is FD#2; the frequency domain range used for PUSCH#3 transmission in the SBFD symbols of the slot n+3 is FD#2. FD#2 is a frequency domain range in which FD#1 overlaps with the UL frequency domain range in the SBFD symbols.

In the embodiments, by determining that the frequency domain range used for the PUSCH transmission in the non-SBFD symbols is the first frequency domain range, and determining that the frequency domain range used for the PUSCH transmission in the SBFD symbols is the second frequency domain range, the second frequency domain range is a frequency domain range in which the first frequency domain range overlaps with the UL frequency domain range in the SBFD symbols, so as to determine the frequency ranges used for the PUSCH transmissions on the non-SBFD symbols and on the SBFD symbols, so that the UE can send the PUSCH transmissions at the correct positions, thereby improving the reliability of the PUSCH transmissions. In addition, the number of canceled PUSCH transmissions in the plurality of PUSCH transmissions can be reduced as much as possible, so that the number of PUSCH transmissions in the plurality of PUSCH transmissions can be increased, the uplink throughput can be improved, and the number of repetition for sending the same PUSCH can also be increased, thereby increasing the uplink coverage. In addition, since no additional signaling is required to indicate the frequency domain range of the PUSCH transmission in the SBFD symbols, the implementation is simple, the complexity is low, and signaling overheads are reduced.

In some embodiments, the target frequency domain range is a third frequency domain range, and the third frequency domain range is a frequency domain range indicated by the first message for the SBFD symbols.

In the embodiments, for any slot, if symbols for the PUSCH transmission in the slot are non-SBFD symbols, it is determined that the frequency domain range used for the PUSCH transmission in the non-SBFD symbols of the slot is the first frequency domain range (for example, FD#1); if symbols for the PUSCH transmission in the slot are SBFD symbols, it is determined that the frequency domain range used for the PUSCH transmission in the SBFD symbols of the slot is the third frequency domain range (for example, FD#3).

For example, the DCI includes two sets of FDRA, the two sets of FDRA respectively indicate FD#1 and FD#3, FD#1 is used for non-SBFD symbols, and FD#3 is used for SBFD symbols.

Referring to FIG. 6c, the slot n is a UL slot, and symbols of the slot n are non-SBFD symbols; the slot n+1 to slot n+3 are SBFD slots, and symbols of the slot n+1 to slot n+3 are all SBFD symbols. The frequency domain range indicated by the first message for the non-SBFD symbols is FD#1, and the frequency domain range indicated for the SBFD symbol is FD#3, and it may be determined that: the frequency domain range used for PUSCH#0 transmission in the non-SBFD symbols of the slot n is FD#1; the frequency domain range used for PUSCH#1 transmission in the SBFD symbols of the slot n+1 is FD#3; the frequency domain range used for PUSCH#2 transmission in the SBFD symbols of the slot n+2 is FD#3; the frequency domain range used for PUSCH#3 transmission in the SBFD symbols of the slot n+3 is FD#3.

In some examples, if the first message indicates the third frequency domain range for the SBFD symbols, a usage priority of the third frequency domain range is higher than a usage priority of the second frequency domain range.

In the embodiments, by determining that the frequency domain range for the PUSCH transmission in the non-SBFD symbols is the first frequency domain range, and determining that the frequency domain range for the PUSCH transmission in the SBFD symbols is the third frequency domain range, the frequency ranges used for the PUSCH transmissions on the non-SBFD symbols and on the SBFD symbols are determined, so that the UE can send the PUSCH transmissions at the correct positions, thereby improving the reliability of the PUSCH transmissions. In addition, the number of PUSCH transmissions cancelled in the plurality of PUSCH transmissions can be reduced as much as possible, so that the number of PUSCH transmissions in the plurality of PUSCH transmissions can be increased, improving the uplink throughput, and the number of repetition of the same PUSCH can also be increased, increasing the uplink coverage.

In some embodiments, when a first condition is met, the target frequency domain range is a fourth frequency domain range, where the first condition includes: a bandwidth used for a UL transmission in the SBFD symbols is greater than or equal to a bandwidth of the first frequency domain range.

In the embodiments, for any slot, if symbols for the PUSCH transmission in the slot are non-SBFD symbols, it is determined that the frequency domain range used for the PUSCH transmission in the non-SBFD symbols of the slot is the first frequency domain range (for example, FD#1); if symbols for the PUSCH transmission in the slot are SBFD symbols, when the first condition is met, it is determined that the frequency domain range used for the PUSCH transmission in the SBFD symbols of the slot is the fourth frequency domain range (for example, FD#4). In this way, FD adaptation for the PUSCHs on the SBFD symbols and the non-SBFD symbols can be realized, and because the frequency range used for the PUSCH transmission on the non-SBFD symbols and on the SBFD symbols are determined, the UE can transmit the PUSCH transmission at the correct position, thereby improving the reliability of the PUSCH transmissions.

In the embodiments, when the bandwidth used in the SBFD symbols is greater than or equal to the bandwidth in the non-SBFD symbols, it is determined that the frequency domain range for the PUSCH transmission in the SBFD symbols is the fourth frequency domain range, which can improve the performance of the PUSCH transmission in the SBFD symbols, thereby improving the reliability of the PUSCH transmission. In addition, since no additional signaling is required to indicate the frequency domain range of the PUSCH transmission in the SBFD symbols, the implementation is simple, the complexity is low, and signaling overheads are reduced.

It may be understood that when the first condition is met, the bandwidth used for UL transmission in the SBFD symbols is greater than or equal to the bandwidth of the first frequency domain range. In this case, there will be a certain frequency domain range in the SBFD symbols, and the bandwidth included in this frequency domain range is equal to the bandwidth of the first frequency domain range, that is, the fourth frequency domain range exists in the SBFD symbols.

In some embodiments, a numerical count of RBs included in the fourth frequency domain range is equal to a numerical count of RBs included in the first frequency domain range, and the fourth frequency domain range is a frequency domain range in which a fifth frequency domain range overlaps with a frequency domain range used for the UL transmission in the SBFD symbols; and a start RB of the fifth frequency domain range is a start RB in a BWP, or an end RB of the fifth frequency domain range is an end RB in the BWP.

In some examples, the fourth frequency domain range may be the same as the fifth frequency domain range.

Referring to FIG. 6d, the slot n is a UL slot, and symbols of slot n are all non-SBFD symbols; the slot n+1 to slot n+3 are SBFD slots, and symbols of slot n+1 to slot n+3 are all SBFD symbols. The frequency domain range indicated by the first message for non-SBFD symbols is FD#1, and it may be determined that: the frequency domain range used for PUSCH#0 transmission in the non-SBFD symbols of the slot n is FD#1; if a bandwidth used for the UL transmission in the SBFD symbols is greater than or equal to a bandwidth of FD#1, since the numerical count of RBs included in FD#1 is equal to the numerical count of RBs included in FD#4, and the start RB of the fifth frequency domain range (FD#1_1) is the start RB in the BWP, and FD#4 is a frequency domain range in which FD#1_1 overlaps with the frequency domain range used for the UL transmission in the SBFD symbols, it is determined that FD#4 is the same as FD#1_1. That is, the frequency domain range used for PUSCH#1 transmission in the SBFD symbols of the slot n+1 is FD#4, the frequency domain range used for PUSCH#2 transmission in the SBFD symbols of the slot n+2 is FD#4, and the frequency domain range used for PUSCH#3 transmission in the SBFD symbols of the slot n+3 is FD#4.

In some other examples, the fourth frequency domain range may be different from the fifth frequency domain range.

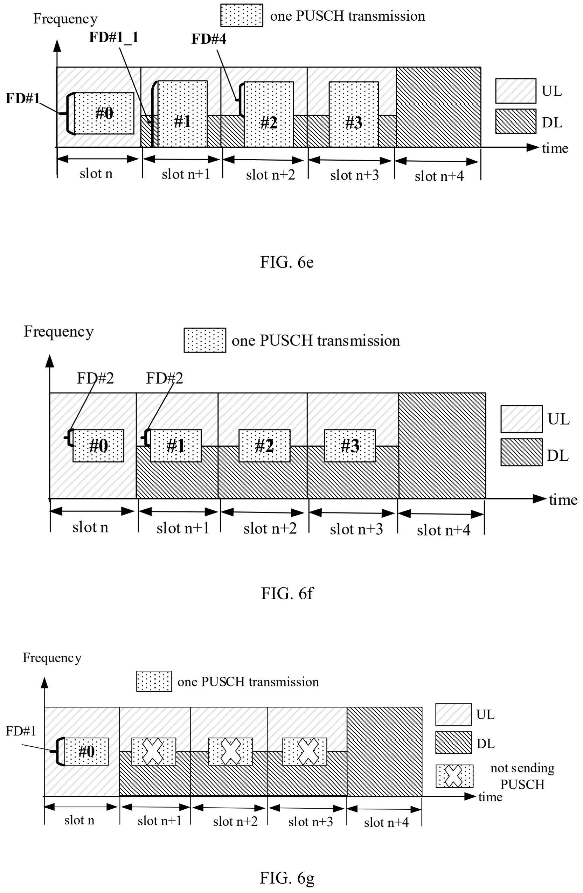

Referring to FIG. 6e, the slot n is a UL slot, and symbols of the slot n are all non-SBFD symbols; the slot n+1 to slot n+3 are all SBFD slots, and symbols of the slot n+1 to slot n+3 are all SBFD symbols. The frequency domain range indicated by the first message for the non-SBFD symbol is FD#1, and it may be determined that: the frequency domain range used for PUSCH#0 transmission in the non-SBFD symbols of the slot n is FD#1; if a bandwidth used for the UL transmission in the SBFD symbols is greater than or equal to a bandwidth of FD#1, since the numerical count of RBs included in FD#1 is equal to the numerical count of RBs included in FD#4, and the start RB of the fifth frequency domain range (for example, FD#1_1) is the start RB in the BWP, and FD#4 is a frequency domain range in which FD#1_1 overlaps with the frequency domain range used for the UL transmission in the SBFD symbols, it is determined that FD#4 is different from FD#1_1. That is, the frequency domain range used for PUSCH#1 transmission in the SBFD symbols of the slot n+1 is FD#4, the frequency domain range used for PUSCH#2 transmission in the SBFD symbols of the slot n+2 is FD#4, and the frequency domain range used for PUSCH#3 transmission in the SBFD symbols of the slot n+3 is FD#4.

For example, FD#1 includes RB#5 to RB#15, FD#1_1 includes RB#0 to RB#21, and FD#4 may be determined to include RB#11 to RB#21.

In some examples, if the first message indicates the third frequency domain range for the SBFD symbol, a usage priority of the third frequency domain range is higher than a usage priority of the fourth frequency domain range.

In the embodiments, by determining that the frequency domain range for the PUSCH transmission in the SBFD symbols is the fourth frequency domain range, since the number of RBs included in the fourth frequency domain range is equal to the number of RBs included in the first frequency domain range, and the fourth frequency domain range is the frequency domain range in which the fifth frequency domain range overlaps with the frequency domain range used for the UL transmission in the SBFD symbols, and the start RB of the fifth frequency domain range is the start RB in the BWP, or the end RB of the fifth frequency domain range is the end RB in the BWP, the frequency range used for the PUSCH transmission on the SBFD symbols are determined, so that the UE can send the PUSCH transmission at the correct position, thereby improving the reliability of the PUSCH transmission in the SBFD symbols. In addition, the number of PUSCH transmissions canceled in the plurality of PUSCH transmissions can be reduced as much as possible, so that the number of PUSCH transmissions in the plurality of PUSCH transmissions can be increased, the uplink throughput can be improved, and the number of repetition of the same PUSCH can also be increased, thereby increasing the uplink coverage.

In some embodiments, the method may further include:
for any one of the slots, determining not to send a PUSCH in the slot in response to symbols used for the PUSCH transmission in the slot including SBFD symbols and not meeting the first condition.

In the embodiments, in one slot, when symbols in which the PUSCH transmission is located include at least one SBFD symbol, and the bandwidth used for the UL transmission in the SBFD symbol is less than the bandwidth of the first frequency domain range, the PUSCH in the slot is not sent, so that implementation can be facilitated, and a complex design that is additionally increased due to a need to ensure the performance of transmitting the PUSCH is avoided.

It may be understood that when the first condition is not met, the bandwidth used for the UL transmission in the SBFD symbols is less than the bandwidth of the first frequency domain range. In this case, there is no fourth frequency domain range and fifth frequency domain range in the SBFD symbols, to make the fourth frequency domain range to be the frequency domain range in which the fifth frequency domain range overlaps with the frequency domain range used for the UL transmission in the SBFD symbols, and to make the bandwidth included in the fourth frequency domain range equal to the bandwidth of the first frequency domain range.

In some embodiments, in the above step S102, determining, based on the first message, the frequency domain range for the PUSCH transmission on the symbols for the PUSCH transmission in each of the plurality of slots may include:
in response to symbols for the PUSCH transmission in at least one of the plurality of slots including non-SBFD symbols, determining that the frequency domain range used for the PUSCH transmission in each slot is a first frequency domain range, where the first frequency domain range is a frequency domain range indicated by the first message for non-SBFD symbols.

In the embodiments, when symbols used for the PUSCH transmission in the at least one slot include non-SBFD symbols, the frequency domain ranges used for the PUSCH transmissions in all slots may be uniformly determined as the first frequency domain range indicated by the first message for non-SBFD symbols.

In the embodiments, by determining that the frequency domain range used for the PUSCH transmission in each slot is the first frequency domain range, the frequency ranges used for the PUSCH transmissions on the non-SBFD symbols and on the SBFD symbols are determined, so that the UE can send the PUSCH transmissions at the correct positions, thereby improving the reliability of the PUSCH transmissions, and there is no need for a signaling separately indicating the frequency domain range of the PUSCH transmission in the SBFD symbols, achieving a simple implementation, a low complexity, and reducing signaling overheads.

In some embodiments, in the above step S102, determining, based on the first message, the frequency domain range for the PUSCH transmission on the symbols for the PUSCH transmission in each of the plurality of slots may include:
in response to symbols for the PUSCH transmission in at least one of the plurality of slots including SBFD symbols, determining that the frequency domain range used for the PUSCH transmission in each slot is a second frequency domain range, where the second frequency domain range is a frequency domain range in which the first frequency domain range overlaps with a UL frequency domain range in the SBFD symbols.

In the embodiments, when symbols used for the PUSCH transmission in the at least one slot include SBFD symbols, the frequency domain ranges used for the PUSCH transmissions in all the time slots may be uniformly determined as the second frequency domain range (for example, FD#2), that is, the frequency domain ranges used for the PUSCH transmissions in all the time slots may be the frequency domain range in which the first frequency domain range overlaps with the UL frequency domain range in the SBFD symbols.

Referring to FIG. 6f, symbols used for the PUSCH transmission in an UL slot are non-SBFD symbols, symbols used for the PUSCH transmission in an SBFD slot are SBFD symbols, and the frequency domain ranges for the PUSCH transmissions in all slots may be uniformly determined as FD#2.

In the embodiments, by determining that the frequency domain range used for the PUSCH transmission in each slot is the second frequency domain range, the frequency ranges used for the PUSCH transmissions on the non-SBFD symbols and on the SBFD symbols are determined, so that the UE can send the PUSCH transmissions at the correct positions, thereby improving the reliability of the PUSCH transmissions, and there is no need for a signaling separately indicating the frequency domain range of the PUSCH transmission in the SBFD symbols, achieving a simple implementation, a low complexity, and reducing signaling overheads.

In some embodiments, the method may further include:
for any one of the plurality of slots, in a case that the frequency domain range used for the PUSCH transmission in the slot is determined as the first frequency domain range, in response to symbols for the PUSCH transmission in the slot including SBFD symbols, and the first frequency domain range and a non-UL frequency domain range in the SBFD symbols having an overlapping frequency domain range, determining not to send the PUSCH in the slot.

Here, determining not to send the PUSCH in the slot may include: determining to cancel the PUSCH transmission in the slot.

In the embodiments, if symbols for the PUSCH transmission in a certain slot includes SBFD symbols, and it is determined that the first frequency domain range for the PUSCH transmission in the slot and the non-UL frequency domain range in the SBFD symbols have the frequency domain range that overlaps with each other, the PUSCH in the slot is not sent, so that the implementation can be facilitated, and the complex design that is additionally increased due to the need to ensure the performance of transmitting the PUSCH is avoided, and the lack of defining the transmission of the PUSCH on the SBFD symbols in the prior art is overcome.

Referring to FIG. 6g, if it is determined that a frequency domain range used for the PUSCH transmission in a certain SBFD slot is FD#1, when symbols for the PUSCH transmission in the SBFD slot includes SBFD symbols, the PUSCH in the SBFD slot is not transmitted.

In some embodiments, the first information includes an information field. When a value of the information field is a first bit value, the first information indicates that the plurality of PUSCH transmissions are able to use SBFD symbols and non-SBFD symbols, and any one of the plurality of PUSCH transmissions is able to use SBFD symbols or non-SBFD symbols.

Alternatively, when a value of the information field is a second bit value, the first information indicates that the plurality of PUSCH transmissions are able to use SBFD symbols and non-SBFD symbols, and any one of the plurality of PUSCH transmissions is able to use SBFD symbols and non-SBFD symbols.

Alternatively, when a value of the information field is a third bit value, the first information indicates that the plurality of PUSCH transmissions are able to use SBFD symbols, and any one of the plurality of PUSCH transmissions is able to use SBFD symbols.

Alternatively, when a value of the information field is a fourth bit value, the first information indicates that the plurality of PUSCH transmissions are able to use non-SBFD symbols, and any one of the plurality of PUSCH transmissions is able to use non-SBFD symbols.

In some examples, the information domain includes several bits, such as two bits.

In some examples, the first bit value is "00", or the second bit value is "01", or the third bit value is "10", or the fourth bit value is "11".

In the embodiments, the content indicated by the first information may be determined based on the value of the information field of the first information, so that the first information explicitly indicates symbols that are able to be used by the plurality of PUSCH transmissions, and symbols that are able to be used by any one of the plurality of PUSCH transmissions. Because the symbols that are able to be used can be clearly determined, the plurality of PUSCH transmissions can be more reliable.

In some embodiments, the method further includes at least one of:
in response to the value of the information field being the first bit value, and for any one of the plurality of slots, symbols in which the PUSCH in the slot is located including at least one DL symbol or including both SBFDs and non-SBFD symbols, determining not to send the PUSCH in the slot;
in response to the value of the information field being the second bit value, and for any one of the plurality of slots, symbols in which the PUSCH in the slot is located including at least one DL symbol, determining not to send the PUSCH in the slot;
in response to the value of the information field being the third bit value, and for any one of the plurality of slots, symbols in which the PUSCH in the slot is located including at least one non-SBFD symbol, determining not to send the PUSCH in the slot; or
in response to the value of the information field being the fourth bit value, and for any one of the plurality of slots, symbols in which the PUSCH in the slot is located including at least one SBFD symbol or DL symbol, determining not to send the PUSCH in the slot.

In the embodiments, by indicating, via the first information, the symbols that are able to be used by the plurality of PUSCH transmissions, and the symbols that are able to be used by any one of the plurality of PUSCH transmissions, in combination with the actual symbols in which the PUSCH in each slot is located, it is determined whether to send the PUSCH in each slot, so that implementation can be facilitated, a complex design that is additionally increased due to a need to ensure the performance of transmitting the PUSCH is avoided, and the UE can transmit the PUSCH transmissions at the correct positions, thereby improving the reliability of the PUSCH transmissions.

In some embodiments, the PUSCH in the plurality of slots includes at least one of:
a DG-PUSCH enabled PUSCH repetition type A with or without available slot counting;
a CG-PUSCH type 1 enabled PUSCH repetition type A with or without available slot counting;
a CG-PUSCH type 2 enabled PUSCH repetition type A with or without available slot counting;
a type 1 CG-PUSCH without repetition;
a type 2 CG-PUSCH without repetition;
a plurality of PUSCHs scheduled by single one DCI; or
a TBoMS with or without repetition.

In some examples, the PUSCH in the plurality of slots is the PUSCH repetition type A.

In some examples, the PUSCH repetition type A includes at least one of:
a DG-PUSCH repetition type A with slot counting;
a type 1 CG-PUSCH repetition type A with slot counting;
a type 2 CG-PUSCH repetition type A with slot counting;
a DG-PUSCH repetition type A without slot counting;
a type 1 CG-PUSCH repetition type A without slot counting; or
a type 2 CG-PUSCH repetition type A without slot counting.

In some embodiments, the method further include:
in the PUSCH repetition type A with available slot counting, not counting a slot in which the PUSCH is unable to be transmitted; or
in the TBoMS with or without repetition, not counting a slot in which the PUSCH is unable to be transmitted.

In this embodiment, the slot in which the PUSCH is unable to be transmitted is not counted, so that the reference basis can be determined for the counting of the available slots.

In some examples, the plurality of PUSCHs are a plurality of PUSCHs in one or more PUSCH groups of type 1 or type 2 CG-PUSCH repetition.

In the embodiments, each PUSCH repetition may be referred to as one group of PUSCHs, there are a plurality of groups of PUSCHs in the type 1 or type 2 CG-PUSCH repetition, and there may be differences in symbol categories in which the PUSCHs of different groups are located. For example, PUSCHs of Group# 1 are on non-SBFD symbols, symbols where PUSCHs of Group#2 is located include SBFD symbols.

In some examples, for type 1 or type 2 CG-PUSCH repetition, the plurality of PUSCHs refer to a plurality of PUSCHs in one group.

In some other examples, for type 1 or type 2 CG-PUSCH repetition, the plurality of PUSCHs refer to a plurality of PUSCHs in all groups.

In the embodiments, the PUSCHs in the plurality of slots indicated by the first message may include the CG-PUSCH type 1 or type 2 enabled PUSCH repetition type A with or without available slot counting, the DG-PUSCH enabled PUSCH repetition type A with or without available slot counting, the type 1 CG-PUSCH without repetition, the type 2 CG-PUSCH without repetition, the plurality of PUSCHs scheduled by single one DCI, and the TBoMS with or without repetition, so that the solutions provided in the embodiments of the present disclosure can be suitable for different application scenarios.

The embodiments of the present disclosure may be combined with other embodiments without contradiction. Any solution (or optional solution) in the embodiments of the present disclosure may be combined with each other without contradiction. Any solution in the embodiments of the present disclosure may be combined with each other without contradicting any solution in other embodiments. The steps in the embodiments of the present disclosure may be switched in order without contradiction.

The following information processing method is performed by a network device, and is similar to the descriptions of the information processing methods performed by the terminal. For technical details and technical effects that are not disclosed in the information processing method embodiments executed by the network device, reference can be made to the descriptions of the information processing methods performed by the terminal, which is not described in detail herein.

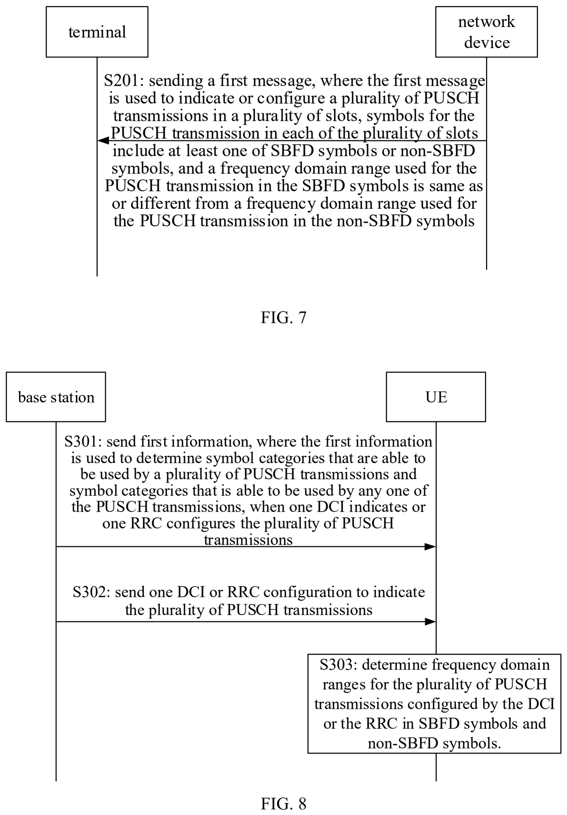

FIG. 7 is a flowchart of an information processing method according to an example embodiment. The information processing method is executed by the network device. As shown in FIG. 7, the information processing method may include the following steps.

S201: sending a first message, where the first message is used to indicate or configure a plurality of PUSCH transmissions in a plurality of slots, symbols for the PUSCH transmission in each of the plurality of slots include at least one of SBFD symbols or non-SBFD symbols, and a frequency domain range used for the PUSCH transmission in the SBFD symbols is same as or different from a frequency domain range used for the PUSCH transmission in the non-SBFD symbols.

In some examples, the information processing method may be performed by a network device, and the network device may be a base station, and the base station may be a gNB.

In some examples, the network device sends the first message to the terminal. The terminal may include various mobile terminals or fixed terminals. For example, the terminal may include, but is not limited to, a mobile phone, a wearable device, an Internet of Things device, or the like.

In some examples, the first message includes at least one of: a DCI, or an RRC message.

In some examples, the PUSCH transmission is used for a transmission of uplink data, or may be used for a transmission of uplink control information (UCI).

In some examples, the plurality of PUSCH transmissions indicated or configured by the first message may be a plurality of different PUSCH transmissions or a plurality of repeated transmissions of a same PUSCH.

In some examples, the first message is used to instruct or configure the terminal to send the PUSCHs in the plurality of slots. For example, the first message instructs or configures the terminal to perform PUSCH repetition, TBoMS with or without repetition, or instruct the terminal to send a plurality of PUSCH transmissions scheduled by a single DCI.

In some examples, the first message may be used to indicate time domain resource information for the PUSCH transmissions.

For example, the time domain resource information includes information such as a slot position, a start symbol position and a time domain length in a slot. The time domain length may be used to represent the numerical count of consecutive symbols allocated to the PUSCH, where the counting starts from the start symbol position.

For example, time domain resource allocation information of the first message includes a row index, and the row index is used by the terminal to search for the time domain resource information for the PUSCH transmission from a preconfigured time domain resource allocation table.

In some examples, the first message may indicate a symbol position occupied by a PUSCH within each slot of the plurality of slots.

In some examples, symbols in one slot may be all SBFD symbols, or all non-SBFD symbols, or the symbols in one slot may include SBFD and non-SBFD symbols.

In some examples, a SBFD symbol is a symbol that includes both of a DL subband and a UL subband in the frequency domain; and a non-SBFD symbol is a symbol that does not include both the DL subband and UL subband in the frequency domain. For example, the non-SBFD symbol is a DL symbol, a UL symbol, or an F symbol.

In some examples, the DCI may indicate a plurality of PUSCH transmissions scheduled based on mini-slot. One mini-slot may be composed of some consecutive symbols in one slot, for example, the length of the uplink mini-slot may be 2, 4, or 7 symbols, and the mini-slot may start at any symbol in one slot.

In some examples, the symbols for the PUSCH transmissions in the plurality of slots may be signaled by the network via a high layer signaling or a physical layer signaling. For example, the physical layer signaling includes DCI.

In some examples, the symbols for the PUSCH transmissions within the plurality of slots include SBFD symbols and/or non-SBFD symbols.

For example, the symbols used for the PUSCH transmission in one slot are all non-SBFD symbols; or the symbols used for the PUSCH transmission in one slot are all SBFD symbols; or the symbols used for PUSCH transmission in one slot include SBFD symbols and non-SBFD symbols.

In some examples, types of symbols for the PUSCH transmissions within different slots may be the same or different. For example, symbols for a PUSCH transmission in a slot n are non-SBFD symbols, symbols for a PUSCH transmission in a slot n+1 are SBFD symbols, and symbols for a PUSCH transmission in a slot n+2 include SBFD symbols and non-SBFD symbols.

In some examples, a frequency domain range used for the PUSCH transmission in the SBFD symbols is same as or different from a frequency domain range used for the PUSCH transmission in the non-SBFD symbols.

In some examples, the first message may be used to indicate or configure a frequency domain range for the PUSCH transmission in the non-SBFD symbols.

For example, the first message is DCI, and an FDRA field in the DCI indicates that the frequency domain range used for the PUSCH transmission in the non-SBFD symbols is a first frequency domain range.

In some examples, the frequency domain range of the PUSCH transmission indicates a frequency domain position occupied by the PUSCH transmission.

In some examples, the frequency domain range may be represented by an RG, a BWP, a PRB, and/or an RB.

In some examples, in a SBFD symbol, a frequency domain range available for a UL transmission is referred to as a UL frequency domain range, and a frequency domain range unavailable for a UL transmission is referred to as a non-UL frequency domain range.

In some examples, the UL frequency domain range may be a frequency domain range in which a UL sub-band overlaps with a UL BWP.

In some other examples, the UL frequency domain range may be a frequency domain range overlapping the UL subband and the GB with the UL BWP.

In some examples, the frequency domain range used for the PUSCH transmission in the SBFD symbols is a second frequency domain range, and the second frequency domain range may be a frequency domain range in which the first frequency domain range indicated by the first message overlaps with the UL frequency domain range in the SBFD symbol.

The embodiments of the present disclosure provide an information processing method, including: sending the first message. The first message is used to indicate the plurality of PUSCH transmissions in the plurality of slots. In this way, the terminal can determine, based on the first message, the frequency domain range for the PUSCH transmission on the symbols for the PUSCH transmission in each of the plurality of slots, where the symbols include at least one of SBFD symbols or non-SBFD symbols. In this way, the frequency ranges used for the PUSCH transmissions on the non-SBFD symbols and on the SBFD symbols can be explicitly determined, which can improve the reliability of the PUSCH transmissions, and a lack of how to determine the frequency domain range of the PUSCH transmission in the SBFD symbols in the prior art can be overcome.

In some embodiments, the method may further include:
sending first information, where the first information indicates at least one of:
a category of symbols able to be used by the plurality of PUSCH transmissions; or
a category of symbols able to be used by any one of the plurality of PUSCH transmissions.

In the embodiments, by sending the first information, since the first information explicitly indicates at least one of the category of the symbols that can be used by the plurality of PUSCH transmissions and the category of the symbol that can be used by any one of the plurality of PUSCH transmissions, the category of the symbols that can be used by the PUSCH transmissions can be clearly determined, and compared with a case in which the symbol category is not determined, the reliability of performing the plurality of PUSCH transmissions is improved.

In some embodiments, the first information indicates at least one of:
the plurality of PUSCH transmissions are able to use SBFD symbols and non-SBFD symbols, and any one of the plurality of PUSCH transmissions is able to use SBFD symbols or non-SBFD symbols;
the plurality of PUSCH transmissions are able to use SBFD symbols and non-SBFD symbols, and any one of the plurality of PUSCH transmissions is able to use SBFD symbols and non-SBFD symbols;
the plurality of PUSCH transmissions are able to use SBFD symbols, and any one of the plurality of PUSCH transmissions is able to use SBFD symbols; or
the plurality of PUSCH transmissions are able to use non-SBFD symbols, and any one of the plurality of PUSCH transmissions is able to use non-SBFD symbols.

In the embodiments, the first information explicitly indicates symbols that are able to be used for performing the plurality of PUSCH transmissions, and symbols that are able to be used by any one of the plurality of PUSCH transmissions, so that the plurality of PUSCH transmissions can be more reliable.

In some embodiments, sending the first information may include:
sending the first information via a second message, where the second message includes at least one of a DCI message, an RRC message, an MAC CE message, or an SIB.

Alternatively, the first information sent via the first message is received. The first message includes at least one of a DCI message or an RRC message.

In some embodiments, the first information is sent to the terminal via the DCI message.

In some embodiments, the first information is sent to the terminal via the RRC message.

In some embodiments, the first information is sent to the terminal via the MAC CE message.

In some embodiments, the first information is sent to the terminal via the SIB1 message.

In the embodiments, a message in the communication process may be reused to receive the first information, which can reduce signaling overheads, reduce resource consumption, and improve resource utilization efficiency.

In some embodiments, for any slot, in response to symbols for the PUSCH transmission in the slot being non-SBFD symbols, the frequency domain range for the PUSCH transmission in the slot is a first frequency domain range, where the first frequency domain range is a frequency domain range indicated by the first message for non-SBFD symbols; and/or

for any slot, in response to symbols for the PUSCH transmission in the slot being SBFD symbols, the frequency domain range for the PUSCH transmission in the slot is a target frequency domain range.

In some examples, the first message is DCI, and an FDRA field in the DCI indicates that the frequency domain range used for the PUSCH transmission in non-SBFD symbol is the first frequency domain range.

In some examples, the target frequency domain range may be the same as or different from the first frequency domain range.

In some embodiments, the target frequency domain range is a second frequency domain range, and the second frequency domain range is a frequency domain range in which the first frequency domain range overlaps with a UL frequency domain range in the SBFD symbols.

In the embodiments, for any slot, if the symbols for the PUSCH transmission in the slot are non-SBFD symbols, it is determined that the frequency domain range for the PUSCH transmission in the non-SBFD symbols of the slot is the first frequency domain range (for example, FD#1); if the symbols for the PUSCH transmission in the slot are SBFD symbols, it is determined that the frequency domain range for the PUSCH transmission in the SBFD symbols of the slot is the second frequency domain range (for example, FD#2).

In some examples, for any slot, symbols used for the PUSCH transmission in the slot are all SBFD symbols or non-SBFD symbols. The frequency domain range used for the PUSCH transmission in the non-SBFD symbols is the first frequency domain range, and the frequency domain range used for the PUSCH transmission in the SBFD symbols is the second frequency domain range.

In some other examples, symbols for the PUSCH transmission in a slot may include SBFD symbols and non-SBFD symbols. A frequency domain range used for the PUSCH transmission in the non-SBFD symbols is the first frequency domain range, and a frequency domain range used for the PUSCH transmission in the SBFD symbols is the second frequency domain range.

In some embodiments, the target frequency domain range is a third frequency domain range, and the third frequency domain range is a frequency domain range indicated by the first message for the SBFD symbols.

In the embodiments, for any slot, if symbols for the PUSCH transmission in the slot are non-SBFD symbols, it is determined that the frequency domain range used for the PUSCH transmission in the non-SBFD symbols of the slot is the first frequency domain range (for example, FD#1); if symbols for the PUSCH transmission in the slot are SBFD symbols, it is determined that the frequency domain range used for the PUSCH transmission in the SBFD symbols of the slot is the third frequency domain range (for example, FD#3).

For example, the DCI includes two sets of FDRA, the two sets of FDRA respectively indicate FD#1 and FD#3, FD#1 is used for non-SBFD symbols, and FD#3 is used for SBFD symbols.

In some embodiments, if the first message indicates the third frequency domain range for the SBFD symbols, a usage priority of the third frequency domain range is higher than a usage priority of the second frequency domain range.

In some embodiments, when a first condition is met, the target frequency domain range is a fourth frequency domain range, where the first condition includes: a bandwidth used for a UL transmission in the SBFD symbols is greater than or equal to a bandwidth of the first frequency domain range.

In the embodiments, for any slot, if symbols for the PUSCH transmission in the slot are non-SBFD symbols, it is determined that the frequency domain range used for the PUSCH transmission in the non-SBFD symbols of the slot is the first frequency domain range (for example, FD#1); if symbols for the PUSCH transmission in the slot are SBFD symbols, when the first condition is met, it is determined that the frequency domain range used for the PUSCH transmission in the SBFD symbols of the slot is the fourth frequency domain range (for example, FD#4). In this way, FD adaptation for the PUSCHs on the SBFD symbols and the non-SBFD symbols can be realized.

In some embodiments, a numerical count of RBs included in the fourth frequency domain range is equal to a numerical count of RBs included in the first frequency domain range, and the fourth frequency domain range is a frequency domain range in which a fifth frequency domain range overlaps with a frequency domain range used for the UL transmission in the SBFD symbols; and a start RB of the fifth frequency domain range is a start RB in a BWP, or an end RB of the fifth frequency domain range is an end RB in the BWP.

In some examples, the fourth frequency domain range may be different from the fifth frequency domain range.

In some other examples, the fourth frequency domain range may be different from the fifth frequency domain range.

In some examples, if the first message indicates the third frequency domain range for the SBFD symbol, a usage priority of the third frequency domain range is higher than a usage priority of the fourth frequency domain range.

In some embodiments, in response to symbols for the PUSCH transmission in at least one of the plurality of slots including non-SBFD symbols, the frequency domain range used for the PUSCH transmission in each slot is a first frequency domain range, where the first frequency domain range is a frequency domain range indicated by the first message for non-SBFD symbols.

In the embodiments, when symbols used for the PUSCH transmission in the at least one slot include non-SBFD symbols, the frequency domain ranges used for the PUSCH transmissions in all slots may be uniformly determined as the first frequency domain range indicated by the first message for non-SBFD symbols.

In some embodiments, in response to symbols for the PUSCH transmission in at least one of the plurality of slots including SBFD symbols, the frequency domain range used for the PUSCH transmission in each slot is a second frequency domain range, where the second frequency domain range is a frequency domain range in which the first frequency domain range overlaps with a UL frequency domain range in the SBFD symbols.

In the embodiments, when symbols used for the PUSCH transmission in the at least one slot include SBFD symbols, the frequency domain ranges used for the PUSCH transmissions in all the time slots may be uniformly determined as the second frequency domain range (for example, FD#2), that is, the frequency domain ranges used for the PUSCH transmissions in all the time slots may be the frequency domain range in which the first frequency domain range overlaps with the UL frequency domain range in the SBFD symbols.

In some embodiments, the first information includes an information field. When a value of the information field is a first bit value, the first information indicates that the plurality of PUSCH transmissions are able to use SBFD symbols and non-SBFD symbols, and any one of the plurality of PUSCH transmissions is able to use SBFD symbols or non-SBFD symbols.

Alternatively, when a value of the information field is a second bit value, the first information indicates that the plurality of PUSCH transmissions are able to use SBFD symbols and non-SBFD symbols, and any one of the plurality of PUSCH transmissions is able to use SBFD symbols and non-SBFD symbols.

Alternatively, when a value of the information field is a third bit value, the first information indicates that the plurality of PUSCH transmissions are able to use SBFD symbols, and any one of the plurality of PUSCH transmissions is able to use SBFD symbols.

Alternatively, when a value of the information field is a fourth bit value, the first information indicates that the plurality of PUSCH transmissions are able to use non-SBFD symbols, and any one of the plurality of PUSCH transmissions is able to use non-SBFD symbols.

In some examples, the information domain includes several bits, such as two bits.

In some examples, the first bit value is "00", or the second bit value is "01", or the third bit value is "10", or the fourth bit value is "11".

In the embodiments, the content indicated by the first information may be determined based on the value of the information field of the first information, so that the first information explicitly indicates symbols that are able to be used by the plurality of PUSCH transmissions, and symbols that are able to be used by any one of the plurality of PUSCH transmissions. Because the symbols that are able to be used can be clearly determined, the plurality of PUSCH transmissions can be more reliable.

In some embodiments, the PUSCH in the plurality of slots includes at least one of:
a DG-PUSCH enabled PUSCH repetition type A with or without available slot counting;
a CG-PUSCH type 1 enabled PUSCH repetition type A with or without available slot counting;
a CG-PUSCH type 2 enabled PUSCH repetition type A with or without available slot counting;
a type 1 CG-PUSCH without repetition;
a type 2 CG-PUSCH without repetition;
a plurality of PUSCHs scheduled by single one DCI; or
a TBoMS with or without repetition.

In some examples, the PUSCH in the plurality of slots is the PUSCH repetition type A.

In some examples, the PUSCH repetition type A includes at least one of:
a DG-PUSCH repetition type A with slot counting;
a type 1 CG-PUSCH repetition type A with slot counting;
a type 2 CG-PUSCH repetition type A with slot counting;
a DG-PUSCH repetition type A without slot counting;
a type 1 CG-PUSCH repetition type A without slot counting; or
a type 2 CG-PUSCH repetition type A without slot counting.

In some examples, the plurality of PUSCHs are a plurality of PUSCHs in one or more PUSCH groups of type 1 or type 2 CG-PUSCH repetition.

In the embodiments, each PUSCH repetition may be referred to as one group of PUSCHs, there are a plurality of groups of PUSCHs in the type 1 or type 2 CG-PUSCH repetition, and there may be differences in symbol categories in which the PUSCHs of different groups are located, for example, PUSCHs of Group#1 are on non-SBFD symbols, symbols where PUSCHs of Group#2 is located include SBFD symbols.

In some examples, for type 1 or type 2 CG-PUSCH repetition, the plurality of PUSCHs refer to a plurality of PUSCHs in one group.

In some other examples, for type 1 or type 2 CG-PUSCH repetition, the plurality of PUSCHs refer to a plurality of PUSCHs in all groups.

In the embodiments, the PUSCHs in the plurality of slots indicated by the first message may include the CG-PUSCH type 1 or type 2 enabled PUSCH repetition type A with or without available slot counting, the DG-PUSCH enabled PUSCH repetition type A with or without available slot counting, the type 1 CG-PUSCH without repetition, the type 2 CG-PUSCH without repetition, the plurality of PUSCHs scheduled by single one DCI, and the TBoMS with or without repetition, so that the solutions provided in the embodiments of the present disclosure can be suitable for different application scenarios.

The embodiments of the present disclosure may be combined with other embodiments without contradiction. Any solution (or optional solution) in the embodiments of the present disclosure may be combined with each other without contradiction. Any solution in the embodiments of the present disclosure may be combined with each other without contradicting any solution in other embodiments. The steps in the embodiments of the present disclosure may be switched in order without contradiction.

In order to further explain the embodiments of the present disclosure, several specific embodiments are provided below.

The embodiments of the present disclosure provide an information processing method, including: sending, by a UE, PUSCHs in a plurality of slots according to a DCI indication or an RRC configuration, and determining frequency domain ranges used on SBFD symbols and non-SBFD symbols, where the plurality of PUSCHs may be on both SBFD symbols and non-SBFD symbols, or the plurality of PUSCHs are on SBFD symbols or non-SBFD symbols.

In some examples, a frequency domain range in SBFD symbols, that is indicated by the FDRA in the DCI or configured by the RRC and indicated by the FDRA in the DCI, is FD#1, a frequency domain range available for a UL transmission is referred to as a UL frequency domain range, and a frequency domain range unavailable for the UL transmission is referred to as a non-UL frequency domain range. FD#2 is a frequency domain range in which FD#1 overlaps with the UL frequency domain range. An example of the UL frequency domain range includes:
option 1: the UL frequency domain range is a frequency domain range in which a UL sub-band overlaps with a UL BWP;
Option 2: the UL frequency domain range is a frequency domain range in which a UL sub-band and a GB overlap with a UL BWP.

FIG. 8 is a schematic interaction diagram of an information processing method according to an embodiment of the present disclosure. As shown in FIG. 8, the method may include the following steps.

Step S301: a base station sends first information, where the first information is used to determine symbol categories that are able to be used by a plurality of PUSCH transmissions and symbol categories that is able to be used by any one of the PUSCH transmissions, when one DCI indicates or one RRC configures the plurality of PUSCH transmissions.

In some embodiments, the UE receives the first information sent by the base station.

In some examples, the first information indicates at least one of:
the plurality of PUSCH transmissions are able to be on both SBFD symbols and non-SBFD symbols, and one PUSCH transmission is only able to be on SBFD symbols or non-SBFD symbols;
the plurality of PUSCH transmissions are able to be on both SBFD symbols and non-SBFD symbols, and one PUSCH transmission is only able to be on SBFD symbols and non-SBFD symbols;
the plurality of PUSCH transmissions are only able to be on SBFD symbols, and one PUSCH transmission is only able to be on SBFD symbols;
the plurality of PUSCH transmissions are only able to be on non-SBFD symbols, and one PUSCH transmission is only able to be on non-SBFD symbols.

Step S302: the base station sends one DCI or RRC configuration to indicate the plurality of PUSCH transmissions.

In some examples, the UE receives the DCI or the RRC configuration sent by the base station.

Step S303: the UE determines frequency domain ranges for the plurality of PUSCH transmissions configured by the DCI or the RRC in SBFD symbols and non-SBFD symbols.

A frequency domain range indicated by an FDRA field in the DCI or the RRC configuration for non-SBFD symbols is FD#1, and for SBFD symbols, a frequency domain range in which the FD#1 overlaps with a UL frequency domain range is FD#2

In some examples, the UL frequency domain range is a frequency domain range in which a UL sub-band overlaps with a UL BWP.

In some other examples, the UL frequency domain range is a frequency domain range in which a UL subband and a GB overlap with a UL BWP.

In some examples, the UE determines frequency domain ranges used by the plurality of PUSCHs on the SBFD symbols and the non-SBFD symbols.

In some examples, the UE determines a frequency domain range used by the plurality of PUSCHs on the SBFD symbols or the non-SBFD symbols.

In some embodiments, the first information indicates that the plurality of PUSCH transmissions are able to be in both SBFD symbols and non-SBFD symbols, and any of the PUSCH transmissions is only able to be in SBFD symbols or non-SBFD symbols, at least one of schemes 3-1 to 3-5 is executed.

Scheme 3-1: In one slot, symbols in which the PUSCH is located are non-SBFDs, and FD uses FD#1; and symbols in which the PUSCH is located are SBFD symbols, and FD uses FD#2.

Scheme 3-2: In all slots, the PUSCHs use FD#1. In one slot, symbols in which the PUSCH is located include at least one SBFD symbols, FD#1 and the non-UL frequency domain range have an intersection, and the PUSCH in the slot is not sent.

Scheme 3-3: among symbols included in the plurality of PUSCHs indicated by the DCI, at least one symbol is SBFD. In all slots, FD of the PUSCHs uses FD#2

Scheme 3-4: the DCI includes two sets of FDRA, indicating FD#1 and FD#3, which are respectively used for non-SBFD symbols and SBFD symbols.

In one slot, symbols in which the PUSCH is located are non-SBFDs, FD uses FD#1; and symbols in which the PUSCH is located are SBFD symbols, FD uses FD#3.

Scheme 3-5: FD adaptation of the PUSCHs on SBFD symbols and non-SBFD symbols.

In one slot, symbols in which the PUSCH is located are non-SBFDs, FD uses FD#1; and symbols in which the PUSCH is located are SBFD symbols, when condition 0 is met, FD uses FD#4.

In some examples, condition 0: a bandwidth available for the UL transmission is greater than or equal to a bandwidth in which FD#1 is located.

In some examples, the number of RBs included in FD#4 in SBFD symbols is equal to the number of RBs of FD#1, and FD#4 is a part of FD#1-1 overlapping with a frequency domain range available for UL transmission.

In some examples, a start RB of FD#1-1 is a start RB in the BWP.

In some examples, an end RB of FD#1-1 is an end RB in the BWP.

In some examples, in one slot, symbols in which the PUSCH is located have SBFD symbols, and when condition 0 is not met, the PUSCH is not sent.

In some embodiments, the first information indicates that the plurality of PUSCH transmissions are able to be on both SBFD symbols and non-SBFD symbols, and any of the PUSCH transmissions is able to be on SBFD symbols or non-SBFD symbols, one or more of the above schemes 3-1 to 3-5 is applied, and condition 1 is considered.

Condition 1: symbols in which one PUSCH transmission is located include at least one DL symbol or includes both SBFD symbols and non-SBFD symbols, and the PUSCH in the slot is not sent.

In some embodiments, the first information indicates that the plurality of PUSCH transmissions are able to be on both SBFD symbols and non-SBFD symbols, and any of the PUSCH transmissions is able to be on SBFD symbols and non-SBFD symbols, and one or more of the above schemes 3-1 to 3-5 is performed.

In some embodiments, the first information indicates that the plurality of PUSCH transmissions are able to be on both SBFD symbols and non-SBFD symbols, and any of the PUSCH transmissions is able to be on SBFD symbols and non-SBFD symbols, one or more of the above schemes 3-1 to 3-5 is applied, and condition 2 is considered.

Condition 2: symbols in which one PUSCH transmission is located includes at least one DL symbol, and the PUSCH in the slot is not sent.

In some embodiments, the first information indicates that the plurality of PUSCH transmissions are only able to be on SBFD symbols, and any of the PUSCH transmissions is able to be on SBFD symbols, and scheme 3-6 is performed.

Scheme 3-6: the PUSCHs use FD#2; and in one slot, symbols in which the PUSCH is located include at least one non-SBFD symbol, and the PUSCH in the slot is not sent.

In some embodiments, the first information indicates that the plurality of PUSCH transmissions are only able to be on non-SBFD symbols, and any of the PUSCH transmissions is able to be on non-SBFD symbols, and scheme 3-7 is performed.

Scheme 3-7: the PUSCHs use FD#1; and in one slot, symbols in which the PUSCH is located include at least one SBFD symbol or DL symbol, and the PUSCH in the slot is not sent.

The information processing method provided in the embodiments of the present disclosure may be applied to scenarios of a CG-PUSCH type 1 or type 2 enabled PUSCH repetition type A with or without available slot counting, a DG-PUSCH enabled PUSCH repetition type A with or without available slot counting, a type 1 CG-PUSCH without repetition, a type 2 CG-PUSCH without repetition, a plurality of PUSCHs scheduled by single one DCI, and a TBoMS with or without repetition.

The information processing method provided in the embodiments of the present disclosure may be applied to the scenarios of the CG-PUSCH type 1 or type 2 enabled PUSCH repetition type A with or without available slot counting, the DG-PUSCH enabled PUSCH repetition type A with or without available slot counting, and the TBoMS with or without repetition. For example, for the counting judgment of the available slots, if the PUSCH in a slot is not able to be transmitted, the slot is not counted.

For the type 1 or type 2 CG-PUSCH repetition, each PUSCH repetition may be referred to as one group of PUSCHs, there are a plurality of groups of PUSCHs in the type 1 or type 2 CG-PUSCH repetition, and there may be differences in symbol categories in which the PUSCHs of different groups are located. For example, PUSCHs of Group#1 are on non-SBFD symbols, symbols where PUSCHs of Group#2 is located include SBFD symbols.

Option 1: for type 1 or type 2 CG-PUSCH repetition, the plurality of PUSCHs refer to a plurality of PUSCHs in one group.

Option 2: for type 1 or type 2 CG-PUSCH repetition, the plurality of PUSCHs refer to a plurality of PUSCHs in all groups.

Under the condition of option 1 or option 2, one or more of scheme 3-1, scheme 3-2, scheme 3-3, scheme 3-4, scheme 3-5, scheme 3-6, or scheme 3-7 are used.

In some embodiments, for steps performed by the base station, reference can be made to the UE-side related descriptions, and details are not described herein again.

In the examples of the present disclosure, some or all of the steps may be arbitrarily combined with some or all of the steps in other examples, or may be arbitrarily combined with implementations of other embodiments.

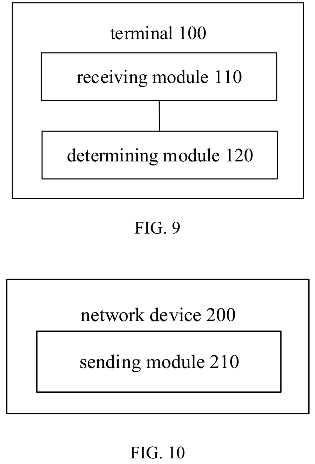

FIG. 9 is a structural diagram of a terminal according to an example embodiment. As shown in FIG. 9, the terminal 100 may include:
a receiving module 110, configured to receive a first message, where the first message is used to indicate or configure a plurality of PUSCH transmissions in a plurality of slots;
a determining module 120, configured to determine, based on the first message, a frequency domain range for a PUSCH transmission on symbols for the PUSCH transmission in each of the plurality of slots, where the symbols includes at least one of SBFD symbols or non-SBFD symbols.

In some embodiments, the receiving module 110 is further configured to:
receive first information, where the first information indicates at least one of:
a category of symbols able to be used by the plurality of PUSCH transmissions; or
a category of symbols able to be used by any one of the plurality of PUSCH transmissions.

In some embodiments, the first information indicates at least one of:
the plurality of PUSCH transmissions are able to use SBFD symbols and non-SBFD symbols, and any one of the plurality of PUSCH transmissions is able to use SBFD symbols or non-SBFD symbols;
the plurality of PUSCH transmissions are able to use SBFD symbols and non-SBFD symbols, and any one of the plurality of PUSCH transmissions is able to use SBFD symbols and non-SBFD symbols;
the plurality of PUSCH transmissions are able to use SBFD symbols, and any one of the plurality of PUSCH transmissions is able to use SBFD symbols; or
the plurality of PUSCH transmissions are able to use non-SBFD symbols, and any one of the plurality of PUSCH transmissions is able to use non-SBFD symbols.

In some embodiments, the determining module 120 is configured to perform at least one of:
for any one of the plurality of slots, in response to symbols for the PUSCH transmission in the slot being non-SBFD symbols, determining that the frequency domain range for the PUSCH transmission in the slot is a first frequency domain range, where the first frequency domain range is a frequency domain range indicated by the first message for non-SBFD symbols; or
for any one of the plurality of slots, in response to symbols for the PUSCH transmission in the slot being SBFD symbols, determining that the frequency domain range for the PUSCH transmission in the slot is a target frequency domain range.

In some embodiments, the target frequency domain range is a second frequency domain range, and the second frequency domain range is a frequency domain range in which the first frequency domain range overlaps with a UL frequency domain range in the SBFD symbols;
the target frequency domain range is a third frequency domain range, and the third frequency domain range is a frequency domain range indicated by the first message for the SBFD symbols; or
the target frequency domain range is a fourth frequency domain range in response to meeting a first condition, where the first condition includes: a bandwidth used for a UL transmission in the SBFD symbols is greater than or equal to a bandwidth of the first frequency domain range.

In some embodiments, a numerical count of RBs included in the fourth frequency domain range is equal to a numerical count of RBs included in the first frequency domain range, and the fourth frequency domain range is a frequency domain range in which a fifth frequency domain range overlaps with a frequency domain range used for the UL transmission in the SBFD symbols; and a start RB of the fifth frequency domain range is a start RB in a BWP, or an end RB of the fifth frequency domain range is an end RB in the BWP.

In some embodiments, the determining module 120 is further configured to:
for any one of the plurality of slots, determine not to send a PUSCH in the slot, in response to symbols used for the PUSCH transmission in the slot including SBFD symbols and not meeting the first condition.

In some embodiments, the determining module 120 is configured to perform at least one of:
in response to symbols for the PUSCH transmission in at least one of the plurality of slots including non-SBFD symbols, determining that the frequency domain range used for the PUSCH transmission in each slot is a first frequency domain range, where the first frequency domain range is a frequency domain range indicated by the first message for non-SBFD symbols; or
in response to symbols for the PUSCH transmission in at least one of the plurality of slots including SBFD symbols, determining that the frequency domain range used for the PUSCH transmission in each slot is a second frequency domain range, where the second frequency domain range is a frequency domain range in which the first frequency domain range overlaps with a UL frequency domain range in the SBFD symbols.

In some embodiments, the determining module 120 is further configured to:
for any one of the plurality of slots, in a case that the frequency domain range used for the PUSCH transmission in the slot is determined as the first frequency domain range, in response to symbols for the PUSCH transmission in the slot including SBFD symbols, and the first frequency domain range and a non-UL frequency domain range in the SBFD symbols having an overlapping frequency domain range, determine not to send the PUSCH in the slot.

In some embodiments, the first information includes an information field, where,
in response to a value of the information field being a first bit value, the first information indicates that the plurality of PUSCH transmissions are able to use SBFD symbols and non-SBFD symbols, and any one of the plurality of PUSCH transmissions is able to use SBFD symbols or non-SBFD symbols;
in response to a value of the information field being a second bit value, the first information indicates that the plurality of PUSCH transmissions are able to use SBFD symbols and non-SBFD symbols, and any one of the plurality of PUSCH transmissions is able to use SBFD symbols and non-SBFD symbols;
in response to a value of the information field being a third bit value, the first information indicates that the plurality of PUSCH transmissions are able to use SBFD symbols, and any one of the plurality of PUSCH transmissions is able to use SBFD symbols; or
in response to a value of the information field being a fourth bit value, the first information indicates that the plurality of PUSCH transmissions are able to use non-SBFD symbols, and any one of the plurality of PUSCH transmissions is able to use non-SBFD symbols.

In some embodiments, the determining module 120 is further configured to perform at least one of:
in response to the value of the information field being the first bit value, and for any one of the plurality of slots, symbols in which the PUSCH in the slot is located including at least one downlink (DL) symbol or including both SBFDs and non-SBFD symbols, determining not to send the PUSCH in the slot;
in response to the value of the information field being the second bit value, and for any one of the plurality of slots, symbols in which the PUSCH in the slot is located including at least one DL symbol, determining not to send the PUSCH in the slot; or
in response to the value of the information field being the third bit value, and for any one of the plurality of slots, symbols in which the PUSCH in the slot is located including at least one non-SBFD symbol, determining not to send the PUSCH in the slot; or
in response to the value of the information field being the fourth bit value, and for any one of the plurality of slots, symbols in which the PUSCH in the slot is located including at least one SBFD symbol or DL symbol, determining not to send the PUSCH in the slot.

In some embodiments, the first message includes at least one of:
DCI; or
an RRC message.

In some embodiments, the PUSCH in the plurality of slots includes at least one of:
a DG-PUSCH enabled PUSCH repetition type A with or without available slot counting;
a CG-PUSCH type 1 enabled PUSCH repetition type A with or without available slot counting;
a CG-PUSCH type 2 enabled PUSCH repetition type A with or without available slot counting;
a type 1 CG-PUSCH without repetition;
a type 2 CG-PUSCH without repetition;
a plurality of PUSCHs scheduled by single one DCI; or
a TBoMS with or without repetition.

In some embodiments, the determining module is further configured to:
in the PUSCH repetition type A with available slot counting, not count a slot in which the PUSCH is unable to be transmitted; or
in the TBoMS with or without repetition, not count a slot in which the PUSCH is unable to be transmitted.

FIG. 10 is a structural diagram of a network device according to an example embodiment. As shown in FIG. 10, the network device 200 includes:
a sending module 210, configured to send a first message, where the first message is used to indicate or configure a plurality of PUSCH transmissions in a plurality of slots, symbols for the PUSCH transmission in each of the plurality of slots include at least one of SBFD symbols or non-SBFD symbols, and a frequency domain range used for the PUSCH transmission in the SBFD symbols is same as or different from a frequency domain range used for the PUSCH transmission in the non-SBFD symbols.

In some embodiments, the sending module 210 is further configured to:
send first information, where the first information indicates at least one of:
a category of symbols able to be used by the plurality of PUSCH transmissions; or
a category of symbols able to be used by any one of the plurality of PUSCH transmissions.

In some embodiments, the first information indicates at least one of:
the plurality of PUSCH transmissions are able to use SBFD symbols and non-SBFD symbols, and any one of the plurality of PUSCH transmissions is able to use SBFD symbols or non-SBFD symbols;
the plurality of PUSCH transmissions are able to use SBFD symbols and non-SBFD symbols, and any one of the plurality of PUSCH transmissions is able to use SBFD symbols and non-SBFD symbols;
the plurality of PUSCH transmissions are able to use SBFD symbols, and any one of the plurality of PUSCH transmissions is able to use SBFD symbols; or
the plurality of PUSCH transmissions are able to use non-SBFD symbols, and any one of the plurality of PUSCH transmissions is able to use non-SBFD symbols.

In some embodiments, for any one of the plurality of slots, in response to symbols for the PUSCH transmission in the slot being non-SBFD symbols, determining that the frequency domain range for the PUSCH transmission in the slot is a first frequency domain range, where the first frequency domain range is a frequency domain range indicated by the first message for non-SBFD symbols; and/or
for any one of the plurality of slots, in response to symbols for the PUSCH transmission in the slot being SBFD symbols, determining that the frequency domain range for the PUSCH transmission in the slot is a target frequency domain range.

In some embodiments, the target frequency domain range is a second frequency domain range, and the second frequency domain range is a frequency domain range in which the first frequency domain range overlaps with a UL frequency domain range in the SBFD symbols;
the target frequency domain range is a third frequency domain range, and the third frequency domain range is a frequency domain range indicated by the first message for the SBFD symbols; or
the target frequency domain range is a fourth frequency domain range in response to meeting a first condition, where the first condition includes: a bandwidth used for a UL transmission in the SBFD symbols is greater than or equal to a bandwidth of the first frequency domain range.

In some embodiments, a numerical count of RBs included in the fourth frequency domain range is equal to a numerical count of RBs included in the first frequency domain range, and the fourth frequency domain range is a frequency domain range in which a fifth frequency domain range overlaps with a frequency domain range used for the UL transmission in the SBFD symbols; and a start RB of the fifth frequency domain range is a start RB in a BWP, or an end RB of the fifth frequency domain range is an end RB in the BWP.

In some embodiments, in response to symbols for the PUSCH transmission in at least one of the plurality of slots including non-SBFD symbols, the frequency domain range used for the PUSCH transmission in each slot is a first frequency domain range, where the first frequency domain range is a frequency domain range indicated by the first message for non-SBFD symbols; or
in response to symbols for the PUSCH transmission in at least one of the plurality of slots including SBFD symbols, the frequency domain range used for the PUSCH transmission in each slot is a second frequency domain range, where the second frequency domain range is a frequency domain range in which the first frequency domain range overlaps with a UL frequency domain range in the SBFD symbols.

In some embodiments, the first information includes an information field, where:
in response to a value of the information field being a first bit value, the first information indicates that the plurality of PUSCH transmissions are able to use SBFD symbols and non-SBFD symbols, and any one of the plurality of PUSCH transmissions is able to use SBFD symbols or non-SBFD symbols;
in response to a value of the information field being a second bit value, the first information indicates that the plurality of PUSCH transmissions are able to use SBFD symbols and non-SBFD symbols, and any one of the plurality of PUSCH transmissions is able to use SBFD symbols and non-SBFD symbols;
in response to a value of the information field being a third bit value, the first information indicates that the plurality of PUSCH transmissions are able to use SBFD symbols, and any one of the plurality of PUSCH transmissions is able to use SBFD symbols; or
in response to a value of the information field being a fourth bit value, the first information indicates that the plurality of PUSCH transmissions are able to use non-SBFD symbols, and any one of the plurality of PUSCH transmissions is able to use non-SBFD symbols.

In some embodiments, the first message includes at least one of:
DCI; or
an RRC message.

In some embodiments, the PUSCH in the plurality of slots includes at least one of:
a DG-PUSCH enabled PUSCH repetition type A with or without available slot counting;
a CG-PUSCH type 1 enabled PUSCH repetition type A with or without available slot counting;
a CG-PUSCH type 2 enabled PUSCH repetition type A with or without available slot counting;
a type 1 CG-PUSCH without repetition;
a type 2 CG-PUSCH without repetition;
a plurality of PUSCHs scheduled by single one DCI; or
a TBoMS with or without repetition.

For the apparatuses in the above embodiments, the specific manners in which each module performs the operations have been described in detail in the embodiments related to the method, and will not be described in detail here.

An embodiment of the present disclosure provides a communication system, including: a terminal and a network device. The terminal is configured to implement the information processing method shown in FIG. 3, and the network device is configured to implement the information processing method shown in FIG. 7.

An embodiment of the present disclosure provides a communication device, including:
one or more processors;
in which the communication device is configured to perform the information processing method provided in any of the foregoing technical solutions.

The processor may include various types of storage media, which is a non-transitory computer storage medium capable of continuing to memorize the information stored thereon after the communication device is powered down.

Herein, the communication device includes a terminal or a network device, and the network device may be, for example, a base station.

The processor may be connected to the memory through a bus or the like, and is configured to read an executable program stored in the memory to perform, for example, at least one of the methods shown in FIG. 3 or FIG. 7.

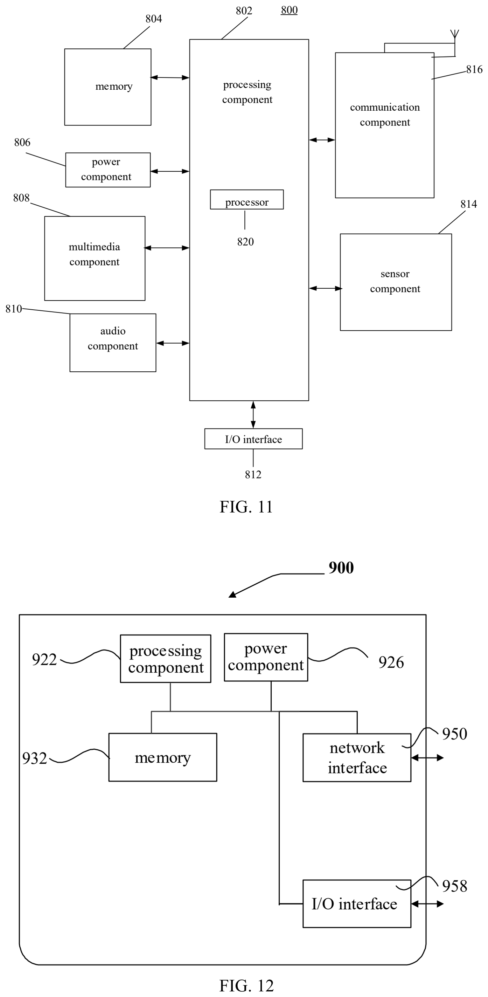

FIG. 11 is a block diagram of a UE 800 according to an example embodiment. For example, the UE 800 may be a mobile phone, computer, digital broadcast user equipment, messaging device, game console, tablet device, medical device, fitness equipment, personal digital assistant, etc.

Referring to FIG. 11, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls the overall operation of the UE 800, such as operations associated with display, telephone calls, data communication, camera operation, and recording operation. The processing component 802 may include one or more processors 820 to execute instructions to perform all or part of the steps of the methods described above. In addition, the processing component 802 may include one or more modules to facilitate the interaction between the processing component 802 and other components. For example, the processing component 802 may include a multimedia module to facilitate interaction between the multimedia component 808 and the processing component 802.

The memory 804 is configured to store various types of data to support the operation of the UE 800. Examples of the data include instructions for any application or method operating on the UE 800, contact data, phonebook data, messages, pictures, videos, etc. The memory 804 may be implemented by any type of volatile or nonvolatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic storage, a flash memory, a magnetic disk or an optical disk.

The power component 806 provides power to the various components of the UE 800. The power component 806 may include a power management system, one or more power supplies, and other components associated with generating, managing, and distributing power to the UE 800.

The multimedia component 808 includes a screen that provides an output interface between the UE 800 and the user. In some embodiments, the screen may include a liquid crystal display (LCD) and a touch panel (TP). If the screen includes a touch panel, the screen can be implemented as a touchscreen to receive input signals from the user. The touch panel includes one or more touch sensors to sense touches, swipes, and gestures on the touch panel. Touch sensors may not only sense the boundaries of touch or swipe actions, but also detect the duration and pressure associated with the touch or swipe operation. In some embodiments, the multimedia component 808 includes a front-facing camera and/or a rear-facing camera. When the UE 800 is in an operating mode, such as shooting mode or video mode, the front camera and/or rear camera may receive external multimedia data. Each front-facing and rear-facing camera can be a fixed optical lens system or have focal length and optical zoom capabilities.

The audio component 810 is configured to output and/or input audio signals. For example, the audio component 810 includes a microphone (MIC) that is configured to receive external audio signals when the UE 800 is in an operating mode, such as call mode, recording mode, and voice recognition mode. The received audio signal may be further stored in the memory 804 or transmitted via the communication component 816. In some embodiments, the audio component 810 further includes a speaker for outputting audio signals.

The I/O interface 812 provides an interface between the processing component 802 and peripheral interface modules, such as a keyboard, a click wheel, a button, etc. The buttons may include, but is not limited to: a home button, a volume button, a start button, and a lock button.

The sensor component 814 includes one or more sensors for providing various aspects of status assessment for the UE 800. For example, the sensor component 814 may detect the on/off state of the UE 800, the relative positioning of components, such as the display and keypad of the UE 800. The sensor component 814 may also detect changes in the position of the UE 800 or a component of the UE 800, the presence or absence of user contact with the UE 800, the orientation or acceleration/deceleration of the UE 800, and temperature changes of the UE 800. The sensor component 814 may include a proximity sensor configured to detect the presence of a nearby object without any physical contact. The sensor component 814 may also include a light sensor, such as a CMOS or CCD image sensor, for use in imaging applications. In some embodiments, the sensor component 814 may also include an accelerometer, a gyroscope, a magnetometer, a pressure sensor, or a temperature sensor.

The communication component 816 is configured to facilitate wired or wireless communication between the UE 800 and other devices. The UE 800 may access wireless networks based on communication standards, such as Wi-Fi, 2G or 3G, or a combination thereof. In an example embodiment, the communication component 816 receives broadcast signals or broadcast-related information from an external broadcast management system via a broadcast channel. In an example embodiment, the communication component 816 further includes a near field communication (NFC) module to facilitate short-range communication. For example, the NFC module may be implemented based on radio frequency identification (RFID) technology, Infrared Data Association (IrDA) technology, ultra-wideband (UWB) technology, Bluetooth (BT) technology, and other technologies.

In an example embodiment, the UE 800 may be implemented by one or more application-specific integrated circuits (ASICs), digital signal processors (DSPs), digital signal handling devices (DSPDs), programmable logic devices (PLDs), field-programmable gate arrays (FPGAs), controllers, microcontrollers, microprocessors, or other electronic components to perform the methods described above.

In an example embodiment, there is also provided a non-transitory computer-readable storage medium including instructions, such as the memory 804 including instructions, which may be executed by the processor 820 of the UE 800 to perform the above methods. For example, the non-transitory computer-readable storage media may be a ROM, a random access memory (RAM), a CD-ROM, a magnetic tape, a floppy disk, and an optical data storage device.

As shown in FIG. 12, an embodiment of the present disclosure shows a structure of a communication device. For example, the communication device 900 may be provided as a network-side device. The communication device may be a base station.

Referring to FIG. 12, the network device 900 includes a processing component 922, which further includes one or more processors, and memory resources represented by a memory 932 for storing instructions, such as applications, that can be executed by the processing component 922. The application program stored in the memory 932 may include one or more modules, each corresponding to a set of instructions. Furthermore, the processing component 922 is configured to execute instructions to perform any of the methods described above applied to the network device, for example, as shown in any one of FIG. 4 to FIG. 9.

The communication device 900 may also include a power component 926 configured to perform power management of the network device 900, a wired or wireless network interface 950 configured to connect the network device 900 to a network, and an input/output (I/O) interface 958. The network device 900 may operate on an operating system stored in the memory 932, such as Windows Server^{™}, Mac OS X^{™}, Unix^{™}, Linux^{™}, FreeBSD^{™}, or similar.

In the case of no contradiction, each step in a particular implementation or embodiment may be implemented as an independent embodiment, and the steps may be arbitrarily combined. For example, the solution after removing some steps in a particular implementation or embodiment may also be implemented as an independent embodiment, and the order of the steps in a particular implementation or embodiment may be arbitrarily interchanged. In addition, the optional methods or examples in a particular implementation or embodiment may be arbitrarily combined. Furthermore, the implementations or embodiments may be arbitrarily combined with each other. For example, some or all of the steps in different implementations or embodiments may be arbitrarily combined, and a particular implementation or embodiment may be arbitrarily combined with the optional methods or examples of other implementations or embodiments.

Other embodiments of the present disclosure will readily occur to those skilled in the art upon consideration of the specification and practice of the present disclosure. The present disclosure is intended to cover any variations, uses, or adaptations of the embodiments that follow the general principles of the present disclosure and include common knowledge or customary techniques in the art that are not disclosed herein. The description and examples are to be considered exemplary only, and the true scope and spirit of the present disclosure are indicated by the following claims.

It should be understood that the present disclosure is not limited to the precise structure described above and shown in the accompanying drawings, and various modifications and changes can be made without departing from its scope. The scope of the present disclosure is limited only by the appended claims.

## Claims

1. An information processing method, performed by a terminal, comprising:
receiving a first message, wherein the first message is used to indicate or configure a plurality of physical uplink shared channel (PUSCH) transmissions in a plurality of slots; and
determining, based on the first message, a frequency domain range for a PUSCH transmission on symbols for the PUSCH transmission in each of the plurality of slots, wherein the symbols comprise at least one of subband full duplex (SBFD) symbols or non-SBFD symbols.

2. The method according to claim 1, further comprising:
receiving first information, wherein the first information indicates at least one of:
a category of symbols able to be used by the plurality of PUSCH transmissions; or
a category of symbols able to be used by any one of the plurality of PUSCH transmissions.

3. The method according to claim 2, wherein the first information indicates at least one of:
the plurality of PUSCH transmissions are able to use SBFD symbols and non-SBFD symbols, and any one of the plurality of PUSCH transmissions is able to use SBFD symbols or non-SBFD symbols;
the plurality of PUSCH transmissions are able to use SBFD symbols and non-SBFD symbols, and any one of the plurality of PUSCH transmissions is able to use SBFD symbols and non-SBFD symbols;
the plurality of PUSCH transmissions are able to use SBFD symbols, and any one of the plurality of PUSCH transmissions is able to use SBFD symbols; or
the plurality of PUSCH transmissions are able to use non-SBFD symbols, and any one of the plurality of PUSCH transmissions is able to use non-SBFD symbols.

4. The method according to any one of claims 1 to 3, wherein determining, based on the first message, the frequency domain range for the PUSCH transmission on the symbols for the PUSCH transmission in each of the plurality of slots, comprises at least one of:
for any one of the plurality of slots, in response to symbols for the PUSCH transmission in the slot being non-SBFD symbols, determining that the frequency domain range for the PUSCH transmission in the slot is a first frequency domain range, wherein the first frequency domain range is a frequency domain range indicated by the first message for non-SBFD symbols; or
for any one of the plurality of slots, in response to symbols for the PUSCH transmission in the slot being SBFD symbols, determining that the frequency domain range for the PUSCH transmission in the slot is a target frequency domain range.

5. The method according to claim 4, wherein
the target frequency domain range is a second frequency domain range, and the second frequency domain range is a frequency domain range in which the first frequency domain range overlaps with an uplink (UL) frequency domain range in the SBFD symbols;
the target frequency domain range is a third frequency domain range, and the third frequency domain range is a frequency domain range indicated by the first message for the SBFD symbols; or
the target frequency domain range is a fourth frequency domain range in response to meeting a first condition, wherein the first condition comprises: a bandwidth used for a UL transmission in the SBFD symbols is greater than or equal to a bandwidth of the first frequency domain range.

6. The method according to claim 5, wherein a numerical count of resource blocks (RBs) comprised in the fourth frequency domain range is equal to a numerical count of RBs comprised in the first frequency domain range, and the fourth frequency domain range is a frequency domain range in which a fifth frequency domain range overlaps with a frequency domain range used for the UL transmission in the SBFD symbols; and
a start RB of the fifth frequency domain range is a start RB in a bandwidth part (BWP), or an end RB of the fifth frequency domain range is an end RB in the BWP.

7. The method according to claim 5 or 6, further comprising:
for any one of the plurality of slots, determining not to send a PUSCH in the slot, in response to symbols used for the PUSCH transmission in the slot comprising SBFD symbols and not meeting the first condition.

8. The method according to any one of claims 1 to 3, wherein determining, based on the first message, the frequency domain range for the PUSCH transmission on the symbols for the PUSCH transmission in each of the plurality of slots, comprises at least one of:
in response to symbols for the PUSCH transmission in at least one of the plurality of slots comprising non-SBFD symbols, determining that the frequency domain range used for the PUSCH transmission in each slot is a first frequency domain range, wherein the first frequency domain range is a frequency domain range indicated by the first message for non-SBFD symbols; or
in response to symbols for the PUSCH transmission in at least one of the plurality of slots comprising SBFD symbols, determining that the frequency domain range used for the PUSCH transmission in each slot is a second frequency domain range, wherein the second frequency domain range is a frequency domain range in which the first frequency domain range overlaps with a UL frequency domain range in the SBFD symbols.

9. The method according to claim 8, further comprising:
for any one of the plurality of slots, in a case that the frequency domain range used for the PUSCH transmission in the slot is determined as the first frequency domain range, in response to symbols for the PUSCH transmission in the slot comprising SBFD symbols, and the first frequency domain range and a non-UL frequency domain range in the SBFD symbols having an overlapping frequency domain range, determining not to send the PUSCH in the slot.

10. The method according to claim 2 or 3, wherein the first information comprises an information field, wherein:
in response to a value of the information field being a first bit value, the first information indicates that the plurality of PUSCH transmissions are able to use SBFD symbols and non-SBFD symbols, and any one of the plurality of PUSCH transmissions is able to use SBFD symbols or non-SBFD symbols;
in response to a value of the information field being a second bit value, the first information indicates that the plurality of PUSCH transmissions are able to use SBFD symbols and non-SBFD symbols, and any one of the plurality of PUSCH transmissions is able to use SBFD symbols and non-SBFD symbols;
in response to a value of the information field being a third bit value, the first information indicates that the plurality of PUSCH transmissions are able to use SBFD symbols, and any one of the plurality of PUSCH transmissions is able to use SBFD symbols; or
in response to a value of the information field being a fourth bit value, the first information indicates that the plurality of PUSCH transmissions are able to use non-SBFD symbols, and any one of the plurality of PUSCH transmissions is able to use non-SBFD symbols.

11. The method according to claim 10, further comprising at least one of:
in response to the value of the information field being the first bit value, and for any one of the plurality of slots, symbols in which the PUSCH in the slot is located comprising at least one downlink (DL) symbol or comprising both SBFDs and non-SBFD symbols, determining not to send the PUSCH in the slot;
in response to the value of the information field being the second bit value, and for any one of the plurality of slots, symbols in which the PUSCH in the slot is located comprising at least one DL symbol, determining not to send the PUSCH in the slot;
in response to the value of the information field being the third bit value, and for any one of the plurality of slots, symbols in which the PUSCH in the slot is located comprising at least one non-SBFD symbol, determining not to send the PUSCH in the slot; or
in response to the value of the information field being the fourth bit value, and for any one of the plurality of slots, symbols in which the PUSCH in the slot is located comprising at least one SBFD symbol or DL symbol, determining not to send the PUSCH in the slot.

12. The method according to any one of claims 1 to 11, wherein the first message comprises at least one of:
downlink control information (DCI); or
a radio resource control (RRC) message.

13. The method according to any one of claims 1 to 12, wherein PUSCHs in the plurality of slots comprise at least one of:
a dynamic grant (DG)-PUSCH enabled PUSCH repetition type A with or without available slot counting;
a configured grant (CG)-PUSCH type 1 enabled PUSCH repetition type A with or without available slot counting;
a CG-PUSCH type 2 enabled PUSCH repetition type A with or without available slot counting;
a type 1 CG-PUSCH without repetition;
a type 2 CG-PUSCH without repetition;
a plurality of PUSCHs scheduled by single one DCI; or
a transport block (TB) processing over multiple slots (TBoMS) with or without repetition.

14. The method according to claim 13, further comprising:
in the PUSCH repetition type A with available slot counting, not counting a slot in which the PUSCH is unable to be transmitted; or
in the TBoMS with or without repetition, not counting a slot in which the PUSCH is unable to be transmitted.

15. An information processing method, performed by a network device, comprising:
sending a first message, wherein the first message is used to indicate or configure a plurality of physical uplink shared channel (PUSCH) transmissions in a plurality of slots, symbols for the PUSCH transmission in each of the plurality of slots comprise at least one of subband full duplex (SBFD) symbols or non-SBFD symbols, and a frequency domain range used for the PUSCH transmission in the SBFD symbols is same as or different from a frequency domain range used for the PUSCH transmission in the non-SBFD symbols.

16. The method according to claim 15, further comprising:
sending first information, wherein the first information indicates at least one of:
a category of symbols able to be used by the plurality of PUSCH transmissions; or
a category of symbols able to be used by any one of the plurality of PUSCH transmissions.

17. The method according to claim 16, wherein the first information indicates at least one of:
the plurality of PUSCH transmissions are able to use SBFD symbols and non-SBFD symbols, and any one of the plurality of PUSCH transmissions is able to use SBFD symbols or non-SBFD symbols;
the plurality of PUSCH transmissions are able to use SBFD symbols and non-SBFD symbols, and any one of the plurality of PUSCH transmissions is able to use SBFD symbols and non-SBFD symbols;
the plurality of PUSCH transmissions are able to use SBFD symbols, and any one of the plurality of PUSCH transmissions is able to use SBFD symbols; or
the plurality of PUSCH transmissions are able to use non-SBFD symbols, and any one of the plurality of PUSCH transmissions is able to use non-SBFD symbols.

18. The method according to any one of claims 15 to 17, wherein
for any one of the plurality of slots, in response to symbols for the PUSCH transmission in the slot being non-SBFD symbols, the frequency domain range for the PUSCH transmission in the slot is a first frequency domain range, wherein the first frequency domain range is a frequency domain range indicated by the first message for non-SBFD symbols; and/or
for any one of the plurality of slots, in response to symbols for the PUSCH transmission in the slot being SBFD symbols, the frequency domain range for the PUSCH transmission in the slot is a target frequency domain range.

19. The method according to claim 18, wherein
the target frequency domain range is a second frequency domain range, and the second frequency domain range is a frequency domain range in which the first frequency domain range overlaps with an uplink (UL) frequency domain range in the SBFD symbols;
the target frequency domain range is a third frequency domain range, and the third frequency domain range is a frequency domain range indicated by the first message for the SBFD symbols; or
the target frequency domain range is a fourth frequency domain range in response to meeting a first condition, wherein the first condition comprises: a bandwidth used for a UL transmission in the SBFD symbols is greater than or equal to a bandwidth of the first frequency domain range.

20. The method according to claim 19, wherein a numerical count of resource blocks (RBs) comprised in the fourth frequency domain range is equal to a numerical count of RBs comprised in the first frequency domain range, and the fourth frequency domain range is a frequency domain range in which a fifth frequency domain range overlaps with a frequency domain range used for the UL transmission in the SBFD symbols; and
a start RB of the fifth frequency domain range is a start RB in a bandwidth part (BWP), or an end RB of the fifth frequency domain range is an end RB in the BWP.

21. The method according to any one of claims 15 to 17, wherein
in response to symbols for the PUSCH transmission in at least one of the plurality of slots comprising non-SBFD symbols, the frequency domain range used for the PUSCH transmission in each slot is a first frequency domain range, wherein the first frequency domain range is a frequency domain range indicated by the first message for non-SBFD symbols; or
in response to symbols for the PUSCH transmission in at least one of the plurality of slots comprising SBFD symbols, the frequency domain range used for the PUSCH transmission in each slot is a second frequency domain range, wherein the second frequency domain range is a frequency domain range in which the first frequency domain range overlaps with a UL frequency domain range in the SBFD symbols.

22. The method according to claim 16 or 17, wherein the first information comprises an information field, wherein:
in response to a value of the information field being a first bit value, the first information indicates that the plurality of PUSCH transmissions are able to use SBFD symbols and non-SBFD symbols, and any one of the plurality of PUSCH transmissions is able to use SBFD symbols or non-SBFD symbols;
in response to a value of the information field being a second bit value, the first information indicates that the plurality of PUSCH transmissions are able to use SBFD symbols and non-SBFD symbols, and any one of the plurality of PUSCH transmissions is able to use SBFD symbols and non-SBFD symbols;
in response to a value of the information field being a third bit value, the first information indicates that the plurality of PUSCH transmissions are able to use SBFD symbols, and any one of the plurality of PUSCH transmissions is able to use SBFD symbols; or
in response to a value of the information field being a fourth bit value, the first information indicates that the plurality of PUSCH transmissions are able to use non-SBFD symbols, and any one of the plurality of PUSCH transmissions is able to use non-SBFD symbols.

23. The method according to any one of claims 15 to 22, wherein the first message comprises at least one of:
downlink control information (DCI); or
a radio resource control (RRC) message.

24. The method according to any one of claims 15 to 23, wherein the PUSCHs in the plurality of slots comprise at least one of:
a dynamic grant (DG)-PUSCH enabled PUSCH repetition type A with or without available slot counting;
a configured grant (CG)-PUSCH type 1 enabled PUSCH repetition type A with or without available slot counting;
a CG-PUSCH type 2 enabled PUSCH repetition type A with or without available slot counting;
a type 1 CG-PUSCH without repetition;
a type 2 CG-PUSCH without repetition;
a plurality of PUSCHs scheduled by single one DCI; or
a transport block (TB) processing over multiple slots (TBoMS) with or without repetition.

25. A terminal, comprising:
a receiving module, configured to receive a first message, wherein the first message is used to indicate or configure a plurality of physical uplink shared channel (PUSCH) transmissions in a plurality of slots; and
a determining module, configured to determine, based on the first message, a frequency domain range for a PUSCH transmission on symbols for the PUSCH transmission in each of the plurality of slots, wherein the symbols comprise at least one of subband full duplex (SBFD) symbols or non-SBFD symbols.

26. A network device, comprising:
a sending module, configured to send a first message, wherein the first message is used to indicate or configure a plurality of physical uplink shared channel (PUSCH) transmissions in a plurality of slots, symbols for the PUSCH transmission in each of the plurality of slots comprise at least one of subband full duplex (SBFD) symbols or non-SBFD symbols, and a frequency domain range used for the PUSCH transmission in the SBFD symbols is same as or different from a frequency domain range used for the PUSCH transmission in the non-SBFD symbols.

27. A terminal, comprising:
at least one processor;
wherein the terminal is configured to perform the information processing method according to any one of claims 1 to 14.

28. A network device, comprising:
at least one processor;
wherein the network device is configured to perform the information processing method according to any one of claims 15 to 24.

29. A communication system, comprising a terminal and a network device, wherein the terminal is configured to implement the information processing method according to any one of claims 1 to 14, and the network device is configured to implement the information processing method according to any one of claims 15 to 24.

30. A storage medium storing instructions that, when run on a communication device, cause the communication device to perform the information processing method according to any one of claims 1 to 14, or the information processing method according to any one of claims 15 to 24.
